(19) Europäisches Patentamt
European Patent Office
Office européen des brevets

(11) **EP 4 009 242 A1**

(12) **EUROPEAN PATENT APPLICATION**

(43) Date of publication:
**08.06.2022 Bulletin 2022/23**

(21) Application number: **21203674.3**

(22) Date of filing: **20.10.2021**

(51) International Patent Classification (IPC):
**G06N 3/04** $^{(2006.01)}$ **G06N 7/00** $^{(2006.01)}$
**G06N 5/00** $^{(2006.01)}$

(52) Cooperative Patent Classification (CPC):
**G06N 3/0445; G06N 3/0472;** G06N 5/003;
G06N 7/005

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.12.2020 JP 2020199761**

(71) Applicant: **FUJITSU LIMITED**
**Kawasaki-shi, Kanagawa 211-8588 (JP)**

(72) Inventor: **Kanda, Kouichi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **OPTIMIZATION APPARATUS AND OPTIMIZATION METHOD**

(57) An optimization apparatus includes a searching unit that searches for an optimum solution that minimizes energy, based on a change amount of the energy when the value of one of a plurality of state variables included in an evaluation function which represent the energy of an Ising model changes; and a transition permissible range determination unit that determines an upper limit or a lower limit of a second identification number of a second state variable for which a change from the second value is permitted in a second state variable group out of the plurality of state variable groups, based on a first identification number of a first state variable that has a first value in a first state variable group out of a plurality of state variable groups included in the plurality of state variables and in each of which one of the state variables has the first value and other state variables have a second value.

FIG. 1

**EP 4 009 242 A1**

**Description**

FIELD

The embodiments discussed herein are related to an optimization apparatus and an optimization method.

BACKGROUND

As an optimization apparatus that calculates a large-scale combinatorial optimization problem which is not easily handled by a Neumann-type computer, there is an Ising apparatus (also referred to as a Boltzmann machine) using an Ising-type evaluation function (also referred to as an energy function or the like).

In calculation by the Ising apparatus, a problem of a calculation target is replaced with an Ising model that is a model representing the behavior of a spin of a magnetic body. A state in which the value of the Ising model type evaluation function (corresponding to the energy of the Ising model) is minimized is searched by a Markov chain Monte Carlo method such as a simulated annealing method or a replica exchange method (also referred to as an exchange Monte Carlo method). The state is represented by values of a plurality of state variables included in the evaluation function.

There is an optimization apparatus of related art that searches for a state in which the energy is minimized by performing the Markov chain Monte Carlo method using a digital circuit. The optimization apparatus of related art calculates an energy change amount by changing by a value of only a single state variable at a time and determines whether to permit a change in the state variable according to a value obtained by adding to the change amount a noise value corresponding to the temperature. The change in the value of the state variable with which the energy increases is also permitted with a predetermined probability, and the probability reduces as the temperature reduces.

There is an optimization problem having a constraint (1-hot constraint) in which the number of state variables having a value of 1 out of a state variable group included in an evaluation function is only one. As the 1-hot constraint, there are a constraint in which each state variable appears only once in a set of constraint expressions and a constraint in which the sum of the values of the state variables included in a single row and a single column is 1 when $N^2$ state variables are arranged in a matrix form of N rows and N columns. Hereinafter, the former 1-hot constraint is referred to as a 1-Way 1-hot constraint, and the latter 1-hot constraint is referred to as a 2-Way 1-hot constraint. For example, traffic optimization problems, bin packing problems, and the like have a 1-Way 1-hot constraint. For example, traveling salesman problems, vehicle dispatch plan problems, quadratic assignment problems, and the like have a 2-Way 1-hot constraint.

In the related art, techniques of calculating a vehicle dispatch plan problem by using a genetic algorithm or quantum calculation have been proposed.

Japanese Laid-open Patent Publication Nos. 2003-285930 and 2003-114132 are disclosed as related art.

SUMMARY

[TECHNICAL PROBLEMS]

Some combinatorial optimization problems include many constraint conditions, and the evaluation function for such combinatorial optimization problems includes constraint terms corresponding to individual constraint conditions. Since an evaluation function including many constraint terms has a complex potential shape including many local maximum values and local minimum values, there is a problem in that convergence to an optimum solution is degraded.

In one aspect, an object of the present disclosure is to provide an optimization apparatus and a method of optimizing that may improve convergence to an optimum solution.

[SOLUTION TO PROBLEM]

According to an aspect of the embodiments, an optimization apparatus includes a searching unit that searches for an optimum solution that minimizes energy, based on a change amount of the energy when the value of one of a plurality of state variables included in an evaluation function which represent the energy of an Ising model changes; and a transition permissible range determination unit that determines an upper limit or a lower limit of a second identification number of a second state variable for which a change from the second value is permitted in a second state variable group out of the plurality of state variable groups, based on a first identification number of a first state variable that has a first value in a first state variable group out of a plurality of state variable groups included in the plurality of state variables and in each of which one of the state variables has the first value and other state variables have a second value.

[ADVANTAGEOUS EFFECTS OF INVENTION]

In the one aspect, the present disclosure may improve the convergence to an optimum solution.

BRIEF DESCRIPTION OF DRAWINGS

FIG. 1 illustrates an example of an optimization apparatus according to a first embodiment;
FIG. 2 illustrates an example of conversion results;
FIG. 3 illustrates examples of the cases where constraint conditions are satisfied and where the constraint conditions are not satisfied;
FIG. 4 illustrates another example of a determination of a range in which the value change is permitted;
FIG. 5 illustrates an example of an optimization apparatus according to a second embodiment;
FIG. 6 illustrates an example of a transition permissible range determination unit;
FIG. 7 illustrates an example of calculation of boundary values;
FIG. 8 illustrates examples of a transition permission-prohibition signal output unit and a storage unit;
FIG. 9 illustrates an example of a transition permission-prohibition bit generation circuit;
FIG. 10 illustrates an example of a $\Delta E$ calculation unit;
FIG. 11 illustrates a storage example of $D_t$ and $r_{i,t}$;
FIG. 12 illustrates an example of case 1;
FIG. 13 illustrates a storage example of $r_{i,t}$ before and after a state transition of case 1;
FIG. 14 illustrates an example of case 2;
FIG. 15 illustrates an example of Case 3;
FIG. 16 illustrates a storage example of $r_{i,t}$ before and after a state transition of Case 3;
FIG. 17 illustrates another example of the $\Delta E$ calculation unit; and
FIG. 18 is a flowchart illustrating an example of a flow of overall operation of the optimization apparatus.

DESCRIPTION OF EMBODIMENTS

Hereafter, embodiments of the present disclosure are described with reference to the drawings.

(First Embodiment)

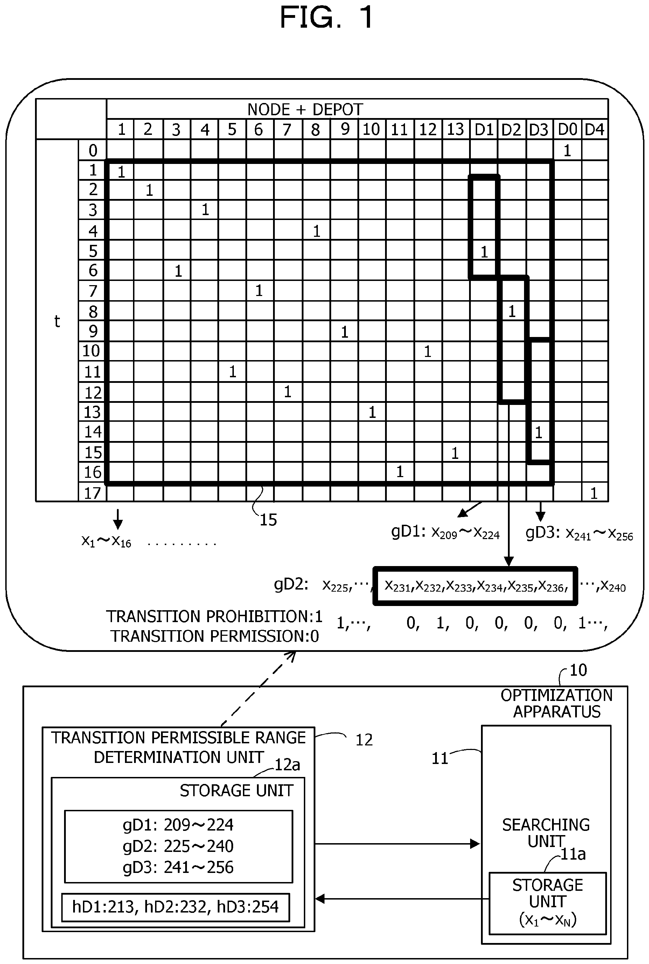

FIG. 1 illustrates an example of an optimization apparatus according to a first embodiment.
An optimization apparatus 10 searches for an optimum solution that minimizes the energy of an Ising model which models a combinatorial optimization problem.
The energy of the Ising model is defined by, for example, an evaluation function (E(x)) as represented by Expression (1) below.

$$E(x) = -\sum_{\langle i,j \rangle} W_{ij} x_i x_j - \sum_{i=1} b_i x_i + c \qquad (1)$$

The first term on the right side adds up the products of two state variable values and a weight coefficient without missing and overlapping for all combinations of two state variables selectable from all state variables included in the evaluation function, where $x_i$ is the ith state variable, $x_j$ is the jth state variable, and $W_{ij}$ is a weight coefficient indicating a weight (for example, strength of coupling) between the ith state variable and the jth state variable. $W_{ii} = 0$. The relation $W_{ij} = W_{ji}$ is often satisfied (for example, the coefficient matrix by a weight coefficient is often a symmetric matrix).
The second term on the right side is a sum of products of bias coefficients of all state variables and values of the state variables, where $b_i$ represents a bias coefficient for the ith state variable and c is a constant.
For example, "-1" of a spin in the Ising model corresponds to a value "0" of the state variable, and "+1" of the spin in the Ising model corresponds to a value "1" of the state variable. Hence, the state variable may be called "bit" having a value of 0 or 1.
The combination of the values of the state variables that minimizes a value of Expression (1) is a solution (optimum solution) of the problem.
The optimization apparatus 10 includes a searching unit 11 and a transition permissible range determination unit 12.

The searching unit 11 performs a determination process that determines, based on the amount of change in energy when a value of any of a plurality of state variables included in the evaluation function as described above changes, whether the value is changeable. Based on the result of the determination process, the searching unit 11 performs a process of changing the value of any of the plurality of state variables (updating process). The searching unit 11 searches for the optimum solution that minimizes the energy by repeating these processes.

In the following example, the searching unit 11 performs the updating process while satisfying a 1-hot constraint (1-Way 1-hot constraint in the following example). The searching unit 11 may perform the updating process while satisfying the 2-Way 1-hot constraint.

For example, the searching unit 11 determines whether to update the values of any two of the state variables of a state variable group that is to satisfy the 1-hot constraint (referred to as a group hereinafter) based on the energy change amount calculated by using a weight coefficient group included in Expression (1). In order to satisfy the 1-hot constraint, only one state variable having a value of 0 is updated to 1 in the case where a state variable having a value of 1 among the state variables included in the group is updated to 0.

In Expression (1), when a value of $x_i$ changes to $1 - x_i$, an increment of $x_i$ is represented as $\Delta x_i = (1 - x_i) - x_i = 1 - 2x_i$. An energy change amount ($\Delta E_i$) due to the change in this value is represented by Expression (2) below.

$$\Delta E_i = E(x)|_{x_i \to 1 - x_i} - E(x)$$
$$= -\Delta x_i \left( \sum_j W_{ij} x_j + b_i \right) = -\Delta x_i h_i \qquad (2)$$

In Expression (2), $\Delta x_i$ becomes -1 when $x_i$ changes from 1 to 0, and $\Delta x_i$ becomes 1 when $x_i$ changes from 0 to 1. In Expression (2), $h_i$ is called a local field, and the product of $h_i$ by a sign (+1 or -1) according to $\Delta x_i$ is $\Delta E_i$.

A change in $h_i$ when $x_j$ changes from 0 to 1 is $\Delta h_i^{(j)} = +Wij$, and a change in $h_i$ when $x_j$ changes from 1 to 0 is $\Delta h_i^{(j)} = -Wij$. Similarly, a change in $h_j$ for $x_j$ when $x_i$ changes may be represented as $\Delta h_j^{(i)} = \Delta x_i W_{ij}$.

Thus, an energy change amount ($\Delta E_{ij}$) when both of $x_i$ and $x_j$ change may be represented by Expression (3) below.

$$\Delta E_{ij} = -\Delta x_i h_i - \Delta x_j (h_j + \Delta x_i W_{ij})$$
$$= -\Delta x_i h_i - \Delta x_j h_j - \Delta x_i \Delta x_j \Delta W_{ij} \qquad (3)$$

As described above, in order to transition from a certain state that satisfies the 1-hot constraint to another state that satisfies this constraint, the values of two state variables are changed. When an energy change amount in the case where $x_i$ changes from 1 to 0 and $x_j$ changes from 0 to 1 is expressed as $\Delta E_j$, since $\Delta x_i = -1$ and $\Delta x_j = 1$, $\Delta E_j$ may be represented by Expression (4) below from Expression (3).

$$\Delta E_j = h_i - h_j + W_{ij} \qquad (4)$$

Since $W_{ij} x_i x_j$ does not contribute to energy when either $x_i$ or $x_j$ is 0 in Expression (1), $W_{ij}$ in Expression (4) is not necessarily provided.

The searching unit 11 calculates the energy change amount as described above for each state variable having a value of 0 out of the state variables of each of groups that are to satisfy the 1-hot constraint. Based on $\Delta E_j$, the searching unit 11 determines whether to permit a change in the state variable that causes the energy change amount by using a simulated annealing method, a replica exchange method, or the like. The searching unit 11 preferentially accepts a change in the state variable that reduces E(x) in Expression (1) and stochastically permits a change that increases E(x). However, in the case where $\Delta E_j$ is a very large positive value, a probability of permitting that change is very small.

When a state variable whose value is to be updated from 0 to 1 in a certain group is determined, the searching unit 11 updates the value of the state variable from 0 to 1 and updates the value of a state variable whose current value is 1 in the group from 1 to 0.

The searching unit 11 includes a storage unit 11a that holds the current values of all the state variables ($x_1$ to $x_N$).

The searching unit 11 is realized by, for example, an electronic circuit such as an application-specific integrated circuit (ASIC) or a field-programmable gate array (FPGA). The storage unit 11a is, for example, an electronic circuit such as a static random-access memory (SRAM) or a register. The searching unit 11 may be realized by software processing resulting from execution of a program by a processor such as a central processing unit (CPU) or a graphics processing unit (GPU).

The transition permissible range determination unit 12 determines a range in which a value change is permitted for a plurality of groups which are included in $x_1$ to $x_N$ and in each of which a single state variable has a first value and remaining state variables have a second value. In the following example, description is given on the assumption that the transition permissible range determination unit 12 determines, for a plurality of groups that are to satisfy the 1-Way 1-hot constraint as described above, the range in which the value change is permitted. For example, although it is assumed that the first value is 1 and the second value is 0, these are not limiting, and the first value may be 0 and the second value may be 1.

Among the plurality of groups, based on an identification number of the state variable having a value of 1 in a certain group, the transition permissible range determination unit 12 determines the upper limit or the lower limit of the identification number of the state variable whose value is permitted to change from 0 to 1 in another group.

In this way, a certain constraint condition may be satisfied without adding a constraint term as will be described later.

The transition permissible range determination unit 12 is realized by, for example, an electronic circuit such an ASIC or an FPGA. The transition permissible range determination unit 12 may be realized by software processing resulting from execution of a program by a processor such as a CPU or a GPU.

In the following, description is given by using, as an example, a routing problem of a plurality of nodes such as a capacitated vehicle routing problem (CVRP). In such a problem, for example, a state variable that represents whether a certain transport vehicle exists at a certain time at a certain node by 0, 1 is used. However, when the number of nodes or the number of transport vehicles increases, the number of state variables increases.

The CVRP is a problem for obtaining order of customers to visit (route) that minimizes a total movement distance or the like based on various input variables when a demand is delivered to (or collected at) a customer position (hereinafter referred to as a node) by a transport vehicle waiting at a specific facility called a depot (departure point) and returns to the depot again.

There are the following constraint conditions A to G as constraint conditions of the CVRP.

(Constraint condition A) For all routes, the total value of the demands of the nodes excluding the depot on the route is within the maximum carrying capacity of a single transport vehicle (hereinafter referred to as a truck).

(Constraint condition B) At all times, the truck passes through (visits) only a single location (one node) on a single route at the same time.

(Constraint condition C) All nodes excluding the depot are passed through by the truck only once.

(Constraint condition D) When the truck passes through a certain node excluding the depot on a certain route at a certain time (> 0), this truck passes through any of the nodes on the route at an immediately preceding time.

(Constraint condition E) After the truck passes through a certain node except the depot on a certain route at a certain time (< M (time for traveling around all nodes)), the truck passes through any of the nodes on the route at an immediately subsequent time.

(Constraint condition F) At all routes, the truck passes through the depot twice on the same route.

(Constraint condition G) For all routes, the truck does not pass through a point other than the depot at the start time and the end time.

The optimization apparatus 10 according to the first embodiment uses, for example, state variables as illustrated in FIG. 1. A cell in which "1" is described indicates a state variable having a value of 1, and a cell in which a value is not described indicates a state variable having a value of 0. FIG. 1 illustrates an example of state variables in the case of calculating a CVRP having 4 trucks and 13 nodes. Although a plurality of depots may be provided, it is assumed that there is a single depot in the following.

In the horizontal axis, 1 to 13 represent node numbers, and D0 to D4 represent the depot. The vertical axis represents time t. Although there is a single depot as described above, D0 to D4 are used so as to permit the departure time from the depot and the return time to the depot of four trucks to be distinguished from each other. For example, a depot from which a first truck departs is represented by D0, a depot to which the first truck returns and a depot from which a second truck departs are indicated by D1, and a depot to which the second truck returns and a depot from which a third truck departs are indicated by D2. A depot to which the third truck returns and a depot from which a fourth truck departs are indicated by D3, and a depot to which the fourth truck returns is indicated by D4.

Thus, it is sufficient that the number of state variables be $18 \times 18$. However, when it is assumed that the first truck departs from the depot at the time t = 0 and the fourth truck returns to the depot at the last time t = 17, the state variables of the rows t = 0, 17 and the columns "D0, D4" are not necessarily provided. Accordingly, the number of state variables indicating whether any of the four trucks is present at any of the 13 nodes or the depot at the time t may be $16 \times 16 = 256$ within a frame 15 of FIG. 1.

For example, the number of state variables included in the evaluation function may be the square of the number of nodes excluding the depot + the number of trucks - 1.

In order to satisfy the constraint conditions B, C, and F, the state variables of 16 × 16 have a 2-Way 1-hot constraint in which the sum of the values of the state variables included in a single row and a single column is 1.

Accordingly, a group of the state variables of each of the columns D1 to D3 is a group that is to satisfy the 1-Way 1-hot constraint. The group of the state variables in each of the column D1 to D3 within the frame 15 may be used to calculate the sum of the carrying capacities (total value of the demands of the nodes) on each route by four trucks.

Hereinafter, the groups of the state variables of the columns D1 to D3 within the frame 15 are respectively referred to as groups gD1, gD2, and gD3. Within the frame 15, state variables ($x_1$ to $x_{208}$) that represent whether there is a truck at a node with a node number n at the time t is represented as $x_{t,n}$. Furthermore, 16 state variables ($x_{209}$ to $x_{224}$) in the group gD1 are represented as $y_{D1,1}$ to $y_{D1,16}$, 16 state variables ($x_{225}$ to $x_{240}$) in the group gD2 are represented as $y_{D2,1}$ to $y_{D2,16}$, and 16 state variables ($x_{241}$ to $x_{256}$) in the group gD3 are represented as $y_{D3,1}$ to $y_{D3,16}$.

In order to calculate the sum of the carrying capacities of four trucks on each route, the state variables of the groups gD1 to gD3 represented as above are converted by, for example, the searching unit 11 based on Expression (5) below.

$$z_{Dk,i} = \sum_{j=i}^{16} y_{Dk,j} \tag{5}$$

In Expression (5), k = 1, 2, 3, i = 1, 2, 3, ..., 16.

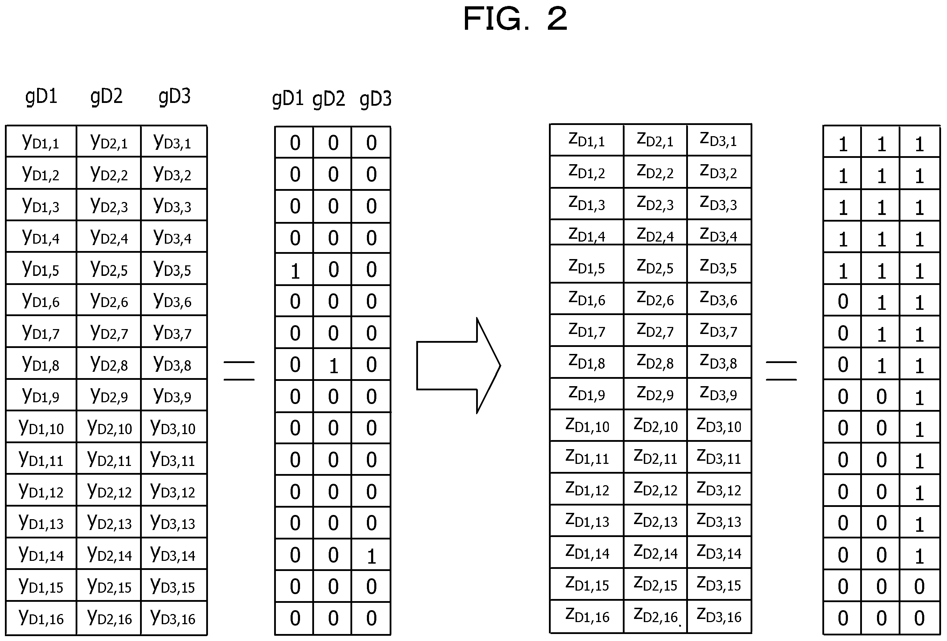

FIG. 2 illustrates an example of conversion results.

In the example illustrated in FIG. 2, $y_{D1,5}$, $y_{D2,8}$, $y_{D3,14}$ are 1. Accordingly, with Expression (5), values after the conversion are as follows: $z_{D1,1}$ to $z_{D1,5}$, $z_{D2,1}$ to $z_{D2,8}$, $z_{D3,1}$ to $z_{D3,14}$ are 1; and others are 0.

The sum of the carrying capacities of four trucks on each of the routes ($D_{TOT1}$ to $D_{TOT4}$) is able to be calculated by, for example, Expressions (6) below by using the values after the above-described conversion.

$$D_{TOT1} = \sum_{t=1}^{16} D_t \cdot z_{D1,t}$$

$$D_{TOT2} = \sum_{t=1}^{16} D_t \cdot z_{D2,t} - D_{TOT1}$$

$$D_{TOT3} = \sum_{t=1}^{16} D_t \cdot z_{D3,t} - (D_{TOT1} + D_{TOT2}) \tag{6}$$

$$D_{TOT4} = \sum_{t=1}^{16} D_t - (D_{TOT1} + D_{TOT2} + D_{TOT3})$$

In Expressions (6), $D_t$ is the sum of demands at the time t and is represented by Expression (7) below.

$$D_t = \sum_{n=1}^{16} D_n \cdot x_{t,n} \tag{7}$$

In Expression (7), $D_n$ is a demand of a node with a node number n. The demand at the depot is 0.

In order to enable the formulation of $D_{TOT1}$ to $D_{TOT4}$ as described above, a constraint condition is that order in which the values of the state variables of the groups gD1 to gD3 become 1 is order of the group "gD1, gD2, gD3". For example, it is desired that the first truck visiting any of the plurality of nodes at a time before a visit by the second truck return to the depot at a time before a return of the second truck. Furthermore, it is desired that the second truck visiting any of the plurality of nodes at a time before a visit by the third truck return to the depot at a time before a return of the third truck. When this constraint condition is not satisfied, a constraint condition violation (constraint condition violation 1) is applied.

In the following example, a case where the state variable of the group gD2 becomes 1 at a time immediately after a time when the state variable of the group gD1 becomes 1 and a case where the state variable of the group gD3 becomes 1 at a time immediately after a time when the state variable of the group gD2 becomes 1 are also set as the constraint condition violation (constraint condition violation 2). For example, it is desired that the second truck do not return to the depot at a time immediately after a time when the first truck returns to the depot. Furthermore, it is desired that the third truck do not return to the depot at a time immediately after a time when the second truck returns to the depot.

Furthermore, a case where the state variables of the groups gD1 to gD3 become 1 at a time immediately after a time when the truck departs from the depot for the first time and a case where the state variables of the group gD1 to gD3 become 1 at a time immediately before a time when the truck finally arrives at the depot are also set as the constraint condition violation (constraint condition violation 3). The constraint condition violations 2 and 3 mean a case where one of the 4 trucks visits none of the nodes. However, the constraint condition violation is not necessarily set depending on problem setting.

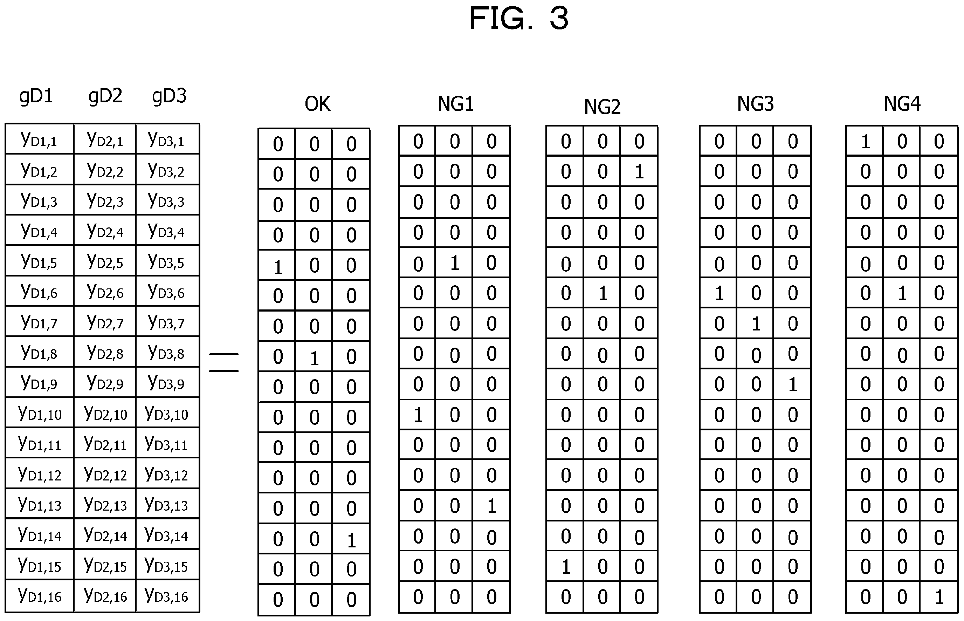

FIG. 3 illustrates examples of the cases where the constraint conditions are satisfied and where the constraint conditions are not satisfied.

In FIG. 3, none of the above-described constraint condition violations are applied to the example indicated as "OK". The constraint condition violation 1 is applied to the examples indicated as "NG1" and "NG2". The constraint condition violation 2 is applied to the example indicated as "NG3", and the constraint condition violation 3 is applied to an example indicated as "NG4".

In the case where constraint terms are added to the evaluation function to suppress the constraint condition violations as described above, the number of constraint terms increases, and there is a possibility of degrading convergence to an optimum solution.

Among the groups gD1 to gD3, based on the identification number of the state variable having a value of 1 in a certain group, the transition permissible range determination unit 12 determines the upper limit or the lower limit of the identification number of the state variable whose value is permitted to change from 0 to 1 in another group.

The transition permissible range determination unit 12 includes a storage unit 12a. The storage unit 12a stores identification numbers to identify the state variables of the group gD1, gD2, gD3. The storage unit 12a further stores identification numbers to identify state variables (hot bits) hD1, hD2, hD3 having a value of 1 in the group "gD1, gD2, gD3". The storage unit 12a is, for example, an electronic circuit such as an SRAM or a register.

In the example illustrated in FIG. 1, 209 to 224 that are the identification numbers of $x_{209}$ to $x_{224}$ are stored as the identification numbers of the state variables of the group gD1. Furthermore, as the identification numbers of the state variables of the group gD2, 225 to 240 that are the identification numbers of $x_{225}$ to $x_{240}$ are stored, and as the identification numbers of the state variables of the group gD3, 241 to 256 that are the identification numbers of $x_{241}$ to $x_{256}$ are stored. Furthermore, as the identification number of the hot bit hD1, 213 that is the identification number of $x_{213}$ is stored, as the identification number of the hot bit hD2, 232 that is the identification number of $x_{232}$ is stored, and as the identification number of the hot bit hD3, 254 that is the identification number of $x_{254}$ is stored.

FIG. 1 illustrates an example of processing performed by the transition permissible range determination unit 12.

In order to avoid the above-described constraint condition violation 3, the lower limit of the identification number of the state variable whose value is permitted to change from 0 to 1 in the group gD1 is 210 obtained by adding 1 to 209 which is the first identification number of the state variable of the group gD1.

In order to avoid the above-described constraint condition violations 1, 2, the upper limit of the identification number of the state variable whose value is permitted to change from 0 to 1 in the group gD1 is determined based on the identification number of the hot bit hD2. In the case where the number of state variables included in each of the groups gD1 to gD3 (group size) is 16 as in the example illustrated in FIG. 1, the identification number of the hot bit hD2 - 16 - 2 is the upper limit of the identification number of the state variable whose value is permitted to change from 0 to 1 in the group gD1. When the identification number of the hot bit hD2 is 232, the upper limit is 232 - 16 -2 = 214.

In order to avoid the above-described constraint condition violations 1, 2, the lower limit of the identification number of the state variable whose value is permitted to change from 0 to 1 in the group gD2 is determined based on the identification number of the hot bit hD1. In the case where the group size = 16, the identification number of the hot bit hD1 + 16 + 2 is the lower limit of the identification number of the state variable whose value is permitted to change from 0 to 1 in the group gD2. When the identification number of the hot bit hD1 is 213, the lower limit is 213 + 16 + 2 = 231.

In order to avoid the above-described constraint condition violations 1, 2, the upper limit of the identification number of the state variable whose value is permitted to change from 0 to 1 in the group gD2 is determined based on the identification number of the hot bit hD3. In the case where the group size = 16, the identification number of the hot bit hD3 - 16 - 2 is the upper limit of the identification number of the state variable whose value is permitted to change from 0 to 1 in the group gD2. When the identification number of the hot bit hD3 is 254, the upper limit is 254 - 16 -2 = 236.

In order to avoid the above-described constraint condition violations 1, 2, the lower limit of the identification number of the state variable whose value is permitted to change from 0 to 1 in the group gD3 is determined based on the identification number of the hot bit hD2. In the case where the group size = 16, the identification number of the hot bit hD2 + 16 + 2 is the lower limit of the identification number of the state variable whose value is permitted to change from 0 to 1 in the state variable group in the D3 column. When the identification number of the hot bit hD2 is 232, the lower limit is 232 + 16 + 2 = 250.

In order to avoid the above-described constraint condition violation 3, the upper limit of the identification number of the state variable whose value is permitted to change from 0 to 1 in the group gD3 is 255 obtained by subtracting 1 from 256 which is the last identification number of the state variable of the group gD3.

The transition permissible range determination unit 12 outputs a signal indicating whether to permit a change in value from 0 to 1 (signal indicating transition prohibition or transition permission) for each of the state variables of the groups gD1 to gD3 based on the upper limits or the lower limits determined as described above. In the example illustrated in FIG. 1, the signal indicating transition prohibition is 1 and the signal indicating transition permission is 0.

For example, regarding the group gD2, the signal indicating transition permission is output for $x_{231}$ to $x_{235}$ other than $x_{232}$ whose value has already been 1 among $x_{231}$ to $x_{235}$ whose values are permitted to change from 0 to 1. For $x_{232}$, $x_{225}$ to $x_{230}$, and $x_{237}$ to $x_{240}$, the signal indicating transition prohibition is output.

For the state variables for which the signal indicating the transition prohibition is output, the searching unit 11 uses a predetermined large positive value as the energy change amount when the values of the state variables change. This may suppress permission of changes in the values of the state variables and suppress the occurrences of the constraint condition violations 1 to 3.

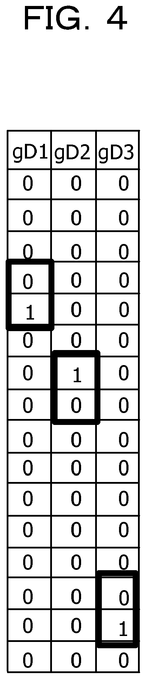

FIG. 4 illustrates another example of the determination of the range in which the value change is permitted.

In the example illustrated in FIG. 4, in the groups gD1 to gD3, the state variables whose values are permitted to change from 0 to 1 are state variables whose identification numbers are greater or smaller, by 1, than the identification numbers of the state variables having a value of 1. However, in order not to cause the above-described constraint condition violations 1 to 3 to be applied, the upper limit or the lower limit of the identification number of the state variable permitted to change is determined as in the above example.

As in the example illustrated in FIG. 4, when the value of the state variable with the identification number greater, by 1, than the identification number of the state variable having a value of 1 changes to 1 in the group gD1, this causes the constraint condition violation 2 to be applied in relation to the state variable having a value of 1 in the group gD2. Thus, in the group gD1, a change in only the state variable with the identification number smaller, by 1, than the identification number of the state variable having a value of 1 is permitted.

When the value of the state variable with the identification number smaller, by 1, than the identification number of the state variable having a value of 1 changes to 1 in the group gD2, this causes the constraint condition violation 2 to be applied in relation to the state variable having a value of 1 in the group gD1. Thus, in the group gD2, a change in only the state variable with the identification number greater, by 1, than the identification number of the state variable having a value of 1 is permitted.

When the value of the state variable with the identification number greater, by 1, than the identification number of the state variable having a value of 1 changes to 1 in the group gD3, this causes the constraint condition violation 3. Thus, in the group gD3, a change in only the state variable with the identification number smaller, by 1, than the identification number of the state variable having a value of 1 is permitted.

Further limiting the range in which the value change is permitted as described above may enable simplification of a hardware configuration of the searching unit 11 that determines whether to permit the change based on the energy change amount in the case where the value of the state variable changes.

In the example illustrated in FIG. 4, the state variables whose values are permitted to change from 0 to 1 are state variables whose identification numbers are greater or smaller, by 1, than the identification numbers of the state variables having a value of 1. However, these value-changeable state variables are not necessarily state variables whose identification numbers are greater or smaller, by 1, than the identification numbers of the state variables having a value of 1. The value-changeable state variables may be appropriately set.

As described above, with the optimization apparatus 10 according to the first embodiment, based on the identification number of the state variable having a value of 1 in a certain group, the upper limit or the lower limit of the identification number of the state variable whose value is permitted to change from 0 to 1 in another group is determined. Thus, the range of the state variable whose value is permitted to change next is able to be limited in accordance with the current state, and a solution that satisfies the constraint condition without increasing the constraint terms is able to be searched. Accordingly, convergence to the optimum solution may be improved.

As illustrated in FIG. 1, it is sufficient that the number of state variables included in the evaluation function be the square of the number of nodes excluding the depot + the number of trucks - 1. Thus, the number of state variables may be suppressed even when the number of nodes or the number of trucks increases.

With the optimization apparatus 10, the groups gD1 to gD3 (the groups of the number of trucks - 1) indicating whether the trucks return to the depot at each of the times are provided for the trucks of the number of trucks - 1, and the sum of the carrying capacities on each of the routes by each of the trucks is able to be calculated by using these. This enables calculation of a constraint term for avoiding a situation in which the sum of the carrying capacities exceeds the maximum carrying capacities (an example of calculation of the constraint term will be described later). Thus, efforts taken in, for example, preparing a plurality of patterns of combinations of the carrying capacities of the trucks that satisfy the maximum carrying capacities to search for an optimum solution for each of the patterns are not desired. Accordingly, an increase in the number of times of execution of an optimum solution search process may be suppressed.

The technique of determining the upper limit or the lower limit of the identification number of the state variable whose value is permitted to change from 0 to 1 as described above is not limited to the routing problem of the plurality of nodes such as the CVRP and may also be applied to other combinatorial optimization problems.

(Second Embodiment)

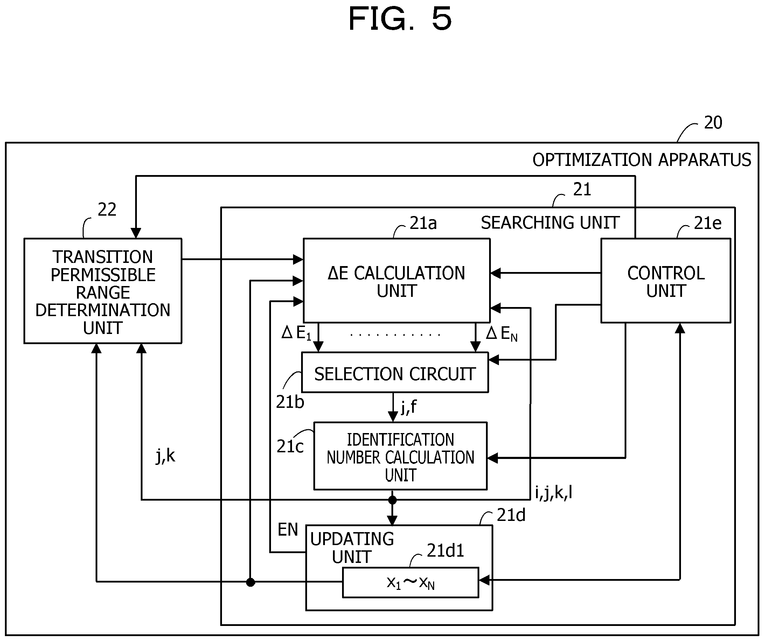

FIG. 5 illustrates an example of an optimization apparatus according to a second embodiment.

An optimization apparatus 20 according to the second embodiment includes a searching unit 21 and a transition permissible range determination unit 22.

The searching unit 21 performs a determination process that determines, based on the energy change amount in the case of a change in the value of any of the plurality of state variables included in the evaluation function, whether the value is changeable. Based on the result of the determination process, the searching unit 21 repeatedly performs the updating process that changes the value of any of the plurality of state variables, thereby searching for an optimum solution that minimizes the energy.

The searching unit 21 performs the updating process while satisfying a 1-hot constraint (2-Way 1-hot constraint in the following example). The searching unit 21 may perform the updating process while satisfying the 1-Way 1-hot constraint as is the case with the searching unit 11 according to the first embodiment.

The 16 × 16 state variables (state variables arranged in 16 rows and 16 columns) set as illustrated in FIG. 1 described above for calculating CVRP have a 2-Way 1-hot constraint.

In the case where searching for a state other than a state satisfying the 2-Way 1-hot constraint is excluded, the values of the four state variables are changed in a single state transition.

When one of the state variables having a value of 0 is set as an update target candidate in a state in which the 2-Way 1-hot constraint is satisfied, the state variables of other three update target candidates are determined. When $x_j$ which is a state variable having a value of 0 is set as the update target candidate, $x_i$, $x_l$ which are state variables having a value of 1 out of the state variables included in the same row and the same column as those of $x_j$ are set as the update target candidates. Furthermore, $x_k$ having a value of 0 in the same column as that of $x_i$ and the same row as that of $x_l$ is set as the update target candidate.

When the energy change of the Ising model generated in the case where the values of these four state variables are changed is $\Delta E_j$, $\Delta E_j$ is able to be represented by Expression (8) below.

$$\Delta E_j = \left(h_i + h_l\right) - \left(h_j + h_k\right) - \left(W_{il} + W_{jk}\right) \qquad (8)$$

Changes in local field due to changes in $x_i$, $x_j$, $x_k$, $x_l$ ($\Delta h_m$ (m = 1, 2, ..., N)) are able to be represented by Expression (9) below.

$$\Delta h_m = W_{jm} + W_{km} - \left(W_{im} + W_{lm}\right) \qquad (9)$$

The searching unit 21 includes a $\Delta E$ calculation unit 21a, a selection circuit 21b, an identification number calculation unit 21c, an updating unit 21d, and a control unit 21e.

In each of the groups satisfying the 1-hot constraint, the $\Delta E$ calculation unit 21a calculates the energy change amount ($\Delta E_1$ to $\Delta E_N$) when transitioning from a certain state satisfying the 1-hot constraint to another state satisfying the 1-hot constraint by state transition of Hamming distance = 4. The $\Delta E$ calculation unit 21a calculates the energy change amount as represented by Expression (8) in order to perform the updating process while satisfying the 1-hot constraint.

For the state variables for which the signal indicating the transition prohibition is output by the transition permissible range determination unit 22 or the state variables which have a current value of 1, the $\Delta E$ calculation unit 21a outputs a predetermined large positive value as the energy change amount when the values of the state variables change. The predetermined large positive value is, for example, a positive maximum value able to be output by the optimization apparatus 20. The state variable having a current value of 1 is notified by N control signals EN output by the updating unit 21d. For example, the control signal EN corresponding to the state variable having a current value of 1 is 1, and the control signal EN corresponding to the state variable having a current value of 0 is 0.

The $\Delta E$ calculation unit 21a is realized by using, for example, a register that holds weight coefficients and the local field, a selector that selects a weight coefficient used for the calculation by Expressions (8) and (9), an adder-subtracter that performs the calculation of Expressions (8) and (9), and so forth.

The selection circuit 21b outputs an identification number = j for identifying one of the state variables whose value is permitted to change from 0 to 1 out of the state variables included in each of the groups having a value of 0 based on a magnitude relationship between thermal excitation energy and $\Delta E_1$ to $\Delta E_N$. The thermal excitation energy is determined based on a random number and T which is a parameter indicating temperature input from the control unit 21e. The thermal excitation energy may also be referred to as a noise value. In some cases, depending on the magnitude relationship between the thermal excitation energy and $\Delta E_1$ to $\Delta E_N$, the change is not permitted for any of the state variables having a value of 0. Hereinafter, it is assumed that, together with the identification number = j, the selection circuit 21b outputs a flag f indicating whether the change in the value of the state variable with the identification number = j is permitted. For example, in the case where the value of the flag f is 1, this indicates that the change in the value of the state variable is permitted, and in the case where the value of the flag f is 0, this indicates that the change is not permitted.

The identification number calculation unit 21c includes, for example, a register that stores an identification number of a group to which each of the state variables belongs and an identification number of the state variable having a value of 1 in each of the groups. The identification number calculation unit 21c calculates the other three identification numbers = i, k, I based on the identification number = j output by the selection circuit 21b.

For example, i and I are the identification numbers of $x_i$ and $x_l$ which are the state variables having a value of 1 out of the state variables included in the same row and the same column as those of $x_j$. The identification number k is the identification number of $x_k$ in the same column as that of $x_i$ and in the same row as that of $x_l$ and k is able to be calculated by k = i + I - j.

Hereinafter, it is assumed that the identification number calculation unit 21c also outputs the identification number = j and the flag f supplied from the selection circuit 21b. The identification numbers = i, j, k, I are supplied to the $\Delta E$ calculation unit 21a and used when updating, based on Expression (9), the local field used to calculate the energy change amount. When the flag f indicates that the change is not permitted, the identification number calculation unit 21c sets the identification numbers = i, j, k, I to, for example, an invalid value (for example, 0).

The identification number calculation unit 21c may be, for example, a unit in which a processor such as a CPU or a GPU performs processing as described above based on the identification number stored in the register or may be realized by using various types of logic circuits.

The updating unit 21d includes a storage unit 21d1 that holds, for example, the values of N state variables ($x_1$ to $x_N$). The storage unit 21d1 is realized by, for example, using an electronic circuit such as a register, an SRAM, or the like. When the flag f indicates that the change is permitted, the updating unit 21d updates the values of the state variables with the identification numbers = i, I output by the identification number calculation unit 21c from 1 to 0 and updates the values of the state variables with the identification numbers = j, k from 0 to 1.

The updating unit 21d updates the energy based on the energy change amount corresponding to the changes of the state variables with the identification numbers = i, j, k, I. The storage unit 21d1 holds minimum energy and a state when the minimum energy is obtained (a state when the energy is at the minimum) at each update time. The updating unit 21d supplies $x_1$ to $x_N$ and the control signal EN described above to the $\Delta E$ calculation unit 21a.

The updating unit 21d may be realized by using an adding circuit for updating the energy, a comparator that compares the updated energy with the previous minimum energy, various types of logic circuits that invert the values of the state variables with the identification numbers = i, j, k, I from 0 to 1 or from 1 to 0, and so forth.

The control unit 21e performs an initial setting process of the optimization apparatus 20. As the initial setting process, setting of the weight coefficient for the calculation of Expression (4), setting of initial values of the local field and the state variables, setting of the identification numbers of the groups to which the state variables belong, and so forth are performed. The initial values of the state variables are set such that the 1-hot constraint is satisfied in each of the groups. For a group for which the transition permissible range determination unit 22 to be described later determines the range in which the value change is permitted, a hot bit is set such that the constraint condition violations 1 to 3 as described above are not applied, for example.

Each time the updating process of updating the state of the Ising model is repeated the predetermined number of times, the control unit 21e reduces the value of T, for example, according to a temperature schedule designated from the outside.

The control unit 21e obtains states ($x_1$ to $x_N$) held by the storage unit 21d1 after the updating process has been repeated the predetermined number of times of repetitions and outputs the states ($x_1$ to $x_N$) to the outside as a solution to the optimization problem, for example. The control unit 21e may obtain and output the minimum energy and the state when the energy is at the minimum held by the storage unit 21d1 after the updating process has been repeated the predetermined number of times of repetitions. The control unit 21e may output the obtained various types of information to a display device (not illustrated) so as to display the information or may transmit the information to an external information processing apparatus.

The control unit 21e may be realized by, for example, an electronic circuit such as an ASIC or an FPGA. The control unit 21e may be a processor such as a CPU or a GPU. In this a case, the processor performs the above-described process by executing a program stored in a memory (not illustrated).

The transition permissible range determination unit 22 determines the range in which the value change is permitted for the plurality of groups such that the predetermined constraint condition violations are not applied.

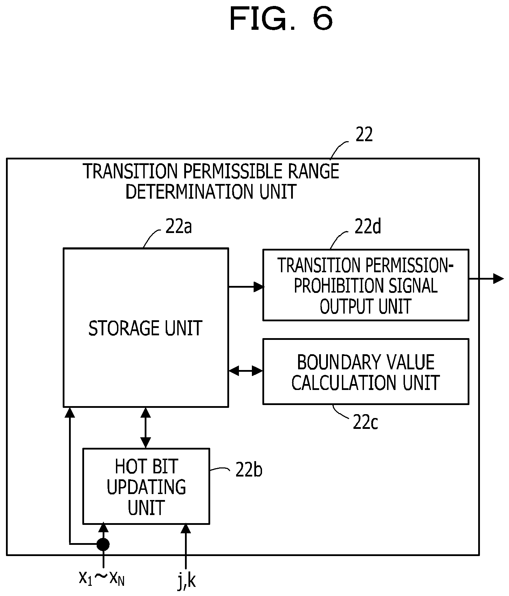

FIG. 6 illustrates an example of the transition permissible range determination unit.

The transition permissible range determination unit 22 includes a storage unit 22a, a hot bit updating unit 22b, a boundary value calculation unit 22c, and a transition permission-prohibition signal output unit 22d.

The storage unit 22a stores, for example, the values and the identification numbers of N state variables, the identification numbers of the groups to which the state variables belong, the identification numbers for identifying the state variables of the plurality of groups for which the transition permissible range is determined, and the group size (the number of state variables belonging to a single group). The storage unit 22a further stores the identification number of the hot bit in each of the groups for which the transition permissible range is determined. These identification numbers and the group size are stored in the storage unit 22a in the above-described initial setting process performed by the control unit 21e. The storage unit 22a further stores boundary values (the upper limit and the lower limit), which are calculated by the boundary value calculation unit 22c, of the identification number of the state variable whose value is permitted to change from 0 to 1 in each of the groups for which the transition permissible range is determined. The storage unit 22a is, for example, an electronic circuit such as an SRAM or a register.

The hot bit updating unit 22b updates the identification number of the hot bit stored in the storage unit 22a based on the identification numbers = j, k and the flag f output by the identification number calculation unit 21c and the state ($x_1$ to $x_N$) held in the storage unit 21d1. For example, when j or k matches the identification number of the state variable of the group for which the transition permissible range stored in the storage unit 22a is determined, and $x_j$ or $x_k$ becomes 1, the hot bit updating unit 22b sets j or k as the identification number of the hot bit of this group. Such a hot bit updating unit 22b may be realized by various types of logic circuits.

Based on the state variable, the identification number of the hot bit, and the group size of each of the groups for which the transition permissible range is determined, the boundary value calculation unit 22c calculates the boundary values (the upper limit and the lower limit) of the identification number of the state variable whose value is permitted to change from 0 to 1 in the group.

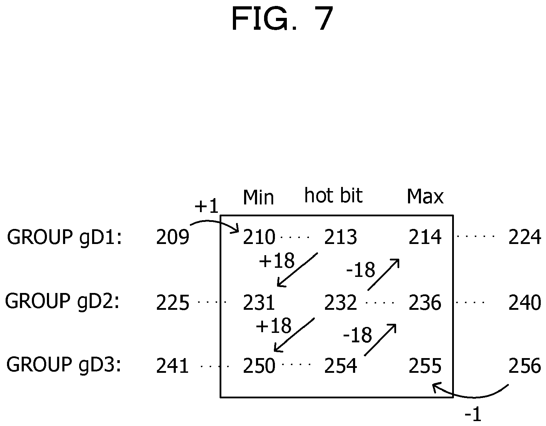

FIG. 7 illustrates an example of the calculation of the boundary values.

FIG. 7 illustrates the example in which the boundary values are calculated such that the constraint condition violations 1 to 3 as described above are not applied.

In the group gD1, a lower limit Min is a value obtained by adding 1 to the first identification number of the state variables of the group gD1, and an upper limit Max is a value obtained by subtracting 18 from the identification number of the hot bit of the group gD2. As described above, 18 is the group size (16) + 2.

In the group gD2, the lower limit Min is a value obtained by adding 18 to the identification number of the hot bit of the group gD1, and the upper limit Max is a value obtained by subtracting 18 from the identification number of the hot bit of the group gD3.

In the group gD3, the lower limit Min is a value obtained by adding 18 to the identification number of the hot bit of the group gD2, and the upper limit Max is a value obtained by subtracting 1 from the last identification number of the state variable of the group gD3.

The boundary value calculation unit 22c that performs such processing is realized by using, for example, various types of logic circuits such as an addition and subtraction circuit and the like.

The transition permission-prohibition signal output unit 22d outputs a signal indicating permission or prohibition of the value change (transition permission-prohibition signal) for each of the state variables belonging to the plurality of groups based on the boundary values calculated by the boundary value calculation unit 22c and stored in the storage unit 22a.

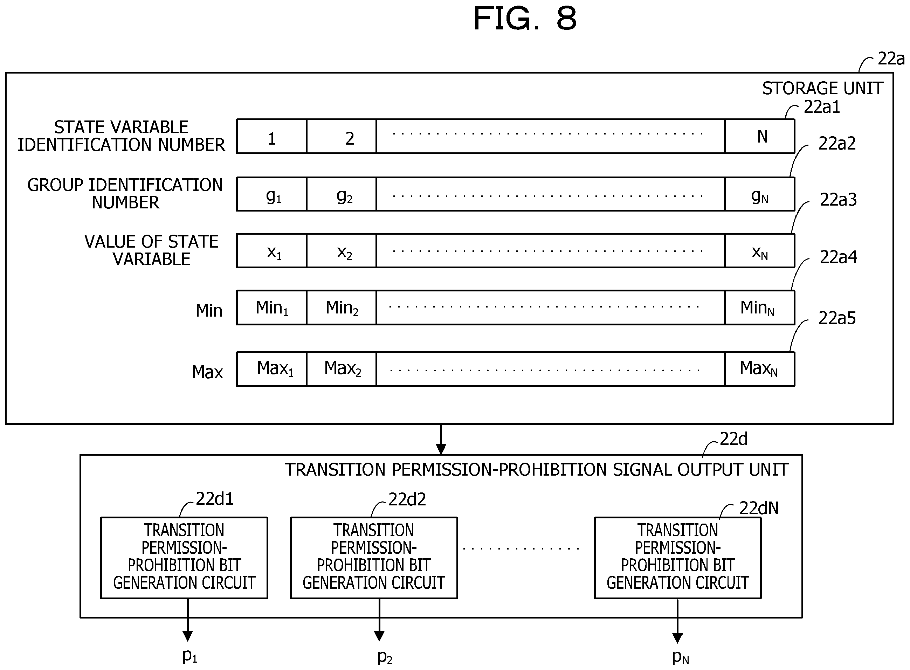

FIG. 8 illustrates examples of the transition permission-prohibition signal output unit and the storage unit.

FIG. 8 illustrates register groups 22a1, 22a2, 22a3, 22a4, 22a5 that store part of information stored in the storage unit 22a.

The register group 22a1 stores the identification numbers (1 to N) of $x_1$ to $x_N$, the register group 22a2 stores the identification numbers ($g_1$ to $g_N$) of the groups to which $x_1$ to $x_N$ respectively belong, and the register group 22a3 stores the values of $x_1$ to $x_N$. The register group 22a4 stores the above-described lower limits ($Min_1$ to $Min_N$) in the groups to which $x_1$ to $x_N$ respectively belong, and the register group 22a5 stores the above-described upper limits (Maxi to Max$_N$) in the groups to which x$_1$ to x$_N$ respectively belong.

The jth Min$_j$ and Max$_j$ out of Min$_1$ to Min$_N$ and Max$_1$ to Max$_N$ are updated when the identification number of the group to which the state variable (x$_j$) with the identification number = j belongs matches the identification number of the group for which the transition permissible range stored in the storage unit 22a is determined. Thus, the lower limit and the upper limit described above remain in the initial values for the group different from the group for which the transition permissible range is determined.

The transition permission-prohibition signal output unit 22d includes transition permission-prohibition bit generation circuits 22d1, 22d2, ..., 22dN. The transition permission-prohibition bit generation circuits 22d1 to 22dN generate and output transition permission-prohibition bits pi, p$_2$, ..., p$_N$ indicating whether to permit the value change from 0 to 1 respectively for x$_1$ to x$_N$ based on the values of x$_1$ to x$_N$, Mini to Min$_N$, and Maxi to Max$_N$. Thus, transition permission-prohibition signals by using the N transition permission-prohibition bits p$_1$ to p$_N$ are output by the transition permission-prohibition signal output unit 22d.

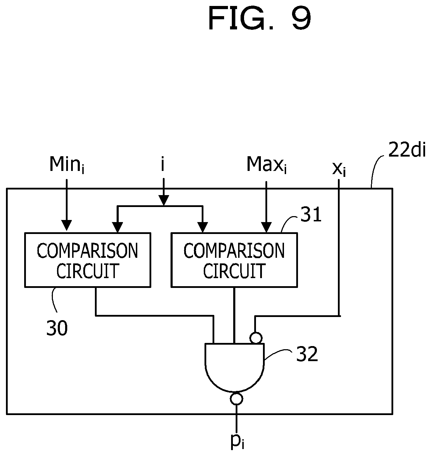

FIG. 9 illustrates an example of a transition permission-prohibition bit generation circuit.

FIG. 9 illustrates a circuit example of the ith transition permission-prohibition bit generation circuit 22di out of the transition permission-prohibition bit generation circuits 22d1 to 22dN illustrated in FIG. 8. The other transition permission-prohibition bit generation circuits may also be realized by a similar circuit configuration.

The transition permission-prohibition bit generation circuit 22di includes comparison circuits 30, 31, and a negative AND (NAND) circuit 32.

The comparison circuit 30 outputs a comparison result between the identification number = i and the above-described lower limit Min$_i$ in the group to which x$_i$ belongs. The comparison circuit 30 outputs 1 in the case of Min$_i$ ≤ i and outputs 0 in the case of Min$_i$ > i.

The comparison circuit 31 outputs a comparison result between the identification number = i and the above-described upper limit Max$_i$ in the group to which x$_i$ belongs. The comparison circuit 30 outputs 1 in the case of Max$_i$ ≥ i and outputs 0 in the case of Max$_i$ < i.

The NAND circuit 32 outputs a NAND between output signals of the comparison circuit 30, 31 and a value obtained by inverting the value of x$_i$ (1 in the case where the x$_i$ value is 0, 0 in the case where the x$_i$ value is 1). In the case where all three inputs are 1, the NAND circuit 32 outputs, as the transition permission-prohibition bit p$_i$, 0 indicating permission of the change in the value of x$_i$ from 0 to 1. In the case where at least one of three inputs are 0, the NAND circuit 32 outputs, as the transition permission-prohibition bit p$_i$, 1 indicating prohibition of the change in the value of x$_i$ from 0 to 1.

Use of the transition permissible range determination unit 22 as described above enables determination of the range in which the value change is permitted for the plurality of groups such that the predetermined constraint condition violations are not applied.

For groups different from the group for which the transition permissible range is determined, for example, it is sufficient that the initial value of the above-described lower limit be set to 1 and the initial value of the above-described upper limit be set to N. In such cases, 0 being a transition permission-prohibition bit indicating that the value change from 0 to 1 is permitted is output for the state variables belonging to the different groups.

(First Calculation Technique for Energy Change Amount Considering Constraint Condition of CVRP)

As described above, in the CVRP, there exists a constraint condition in which, for all routes, the total value of the demands of the nodes excluding the depot on the route is within the maximum carrying capacity of a single truck. For example, the sum of the carrying capacities of four trucks on each of the routes (D$_{TOT1}$ to D$_{TOT4}$) is able to be calculated by Expressions (6) described above, and these are quadratics with respect to the state variables. Accordingly, D$_{TOT1}$ to D$_{TOT4}$ are able to be converted into Expressions (10) below.

$$D_{TOT1} = \frac{1}{2}{}^t x \cdot V_1 \cdot x$$
$$D_{TOT2} = \frac{1}{2}{}^t x \cdot V_2 \cdot x$$
$$D_{TOT3} = \frac{1}{2}{}^t x \cdot V_3 \cdot x \qquad (10)$$
$$D_{TOT4} = \frac{1}{2}{}^t x \cdot V_4 \cdot x$$

In Expressions (10), x is an $(x_1, x_2, ..., x_N)$ matrix, and each of Vi to $V_4$ is an N × N matrix.

When the maximum carrying capacity is Q, the above-described constraint condition is able to be represented as $D_{TOT1}$ to $D_{TOT4} \leq Q$.

An evaluation function including such a quadratic inequality constraint as the constraint term is able to be represented by the following Expression (11).

$$E = C + max(D_{TOT1} - Q, 0) + \cdots + max(D_{TOT4} - Q, 0) (11)$$

In Expression (11), C is a cost term and represents a total movement distance of four trucks. The cost term C is able to be represented by Expression (12) below.

$$C = \frac{1}{2}{}^t x \cdot W \cdot x \qquad (12)$$

In Expression (12), W is an N & × N matrix with $W_{ij}$ as represented in Expression (1).

A change in the value of the evaluation function (energy change amount) ΔE as described above is able to be represented by Expression (13) below.

$$\Delta E = \Delta C + \Delta P_1 + \cdots + \Delta P_4$$
$$\Delta P_i = max(D_{TOTi} + \Delta D_{TOTi} - Q, 0) \qquad (13)$$
$$\quad - max(D_{TOTi} - Q, 0)$$

In the ΔE calculation unit 21a as illustrated in FIG. 5, in order to calculate ΔE as described above as illustrated in Expression (13), ΔC, $\Delta P_1$ to $\Delta P_4$ may be individually calculated in parallel and added together.

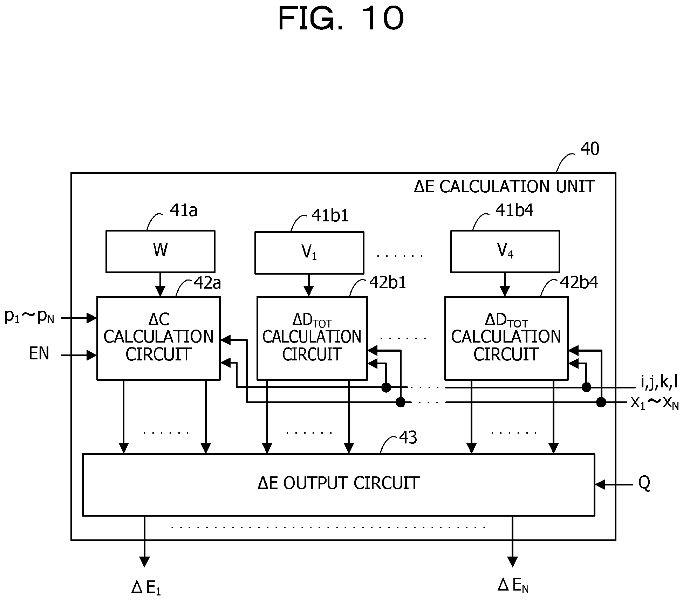

FIG. 10 illustrates an example of the ΔE calculation unit.

A ΔE calculation unit 40 includes storage units 41a, 41b1 to 41b4, a ΔC calculation circuit 42a, $\Delta D_{TOT}$ calculation circuits 42b1 to 42b4, and a ΔE output circuit 43.

The storage unit 41a stores W described above. The storage units 41b1 to 41b4 store $V_1$ to $V_4$ described above. The storage unit 41a, 41b1 to 41b4 may be realized by, for example, using an electronic circuit such as a register, an SRAM, or the like.

The ΔC calculation circuit 42a calculates the energy change amount (ΔC) corresponding to $\Delta E_j$ as represented by Expression (8) for each of $x_1$ to $x_N$. The identification numbers = i, j, k, l supplied to the ΔC calculation circuit 42a are used to select elements of W used for the calculation. The local field (for example, held in registers) of Expression (8) is propagated to a circuit that calculates the energy change amount for any of $x_1$ to $x_N$ by using $x_1$ to $x_N$.

However, the ΔC calculation circuit 42a outputs a large positive value as the change amount for the state variable for which the corresponding control signal EN is 1 or the state variable for which a corresponding one of the transition permission-prohibition bits $p_1$ to $p_N$ is 1.

The $\Delta D_{TOT}$ calculation circuits 42b1 to 42b4 calculate energy change amounts ($\Delta D_{TOT1}$ to $\Delta D_{TOT4}$) corresponding to $\Delta E_j$ as represented by Expression (8) for each of $x_1$ to $x_N$. However, unlike the ΔC calculation circuit 42a, the $\Delta D_{TOT}$ calculation circuits 42b1 to 42b4 use $V_1$ to $V_4$ instead of W. For example, the $\Delta D_{TOT}$ calculation circuit 42b1 calculates the energy change amount $\Delta D_{TOT1}$ for each $x_1$ to $x_N$ by using $V_1$.

The identification numbers = i, j, k, l supplied to the $\Delta D_{TOT}$ calculation circuits 42b1 to 42b4 are used to select the elements of $V_1$ to $V_4$ used for the calculation. The local field of Expression (8) is propagated to the circuit that calculates the energy change amount for any of $x_1$ to $x_N$ by using $x_1$ to $x_N$.

The $\Delta D_{TOT}$ calculation circuits 42b1 to 42b4 may also output a large positive value as the change amount for the state variable for which the corresponding control signal EN is 1 or the state variable for which the corresponding transition permission-prohibition bits $p_1$ to $p_N$ are 1.

Based on Expression (13), the ΔE output circuit 43 calculates and outputs $\Delta E_1$ to $\Delta E_N$ that are the respective energy change amounts for $x_1$ to $x_N$.

(Second Calculation Technique for Energy Change Amount Considering Constraint Condition of CVRP)

According to a second calculation technique, the optimization apparatus 20 calculates, based on Expression (7), and stores a total $D_t$ of the demands at each of the times t. The optimization apparatus 20 stores a variable $r_{i,t}$ indicating whether the truck passes through a route i at the time t.

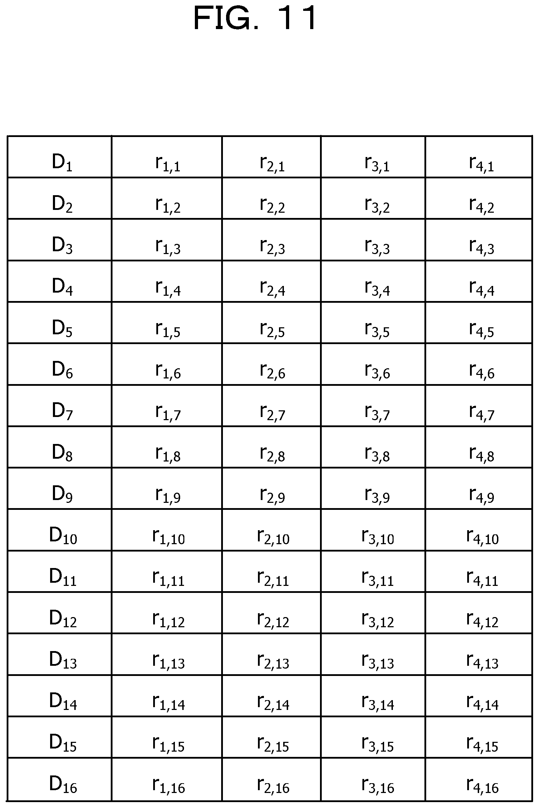

FIG. 11 illustrates a storage example of $D_t$ and $r_{i,t}$.

FIG. 11 illustrates the storage example of the $D_t$ and the $r_{i,t}$ when i = 1 to 4, t = 1 to 16. Regarding $r_{i,t}$, $r_{i,t}$ is 1 in the case where the truck passes through the route i at the time t and 0 in the case where the truck does not pass through the route i at the time t.

In $x_1$ to $x_N$, in accordance with the identification number of the state variable whose value changes, there are case 1 where the order of the nodes to visit on the same route changes, case 2 where the nodes to visit are exchanged between different routes, and case 3 where the order of the depots to visit and the order of the nodes to visit are exchanged.

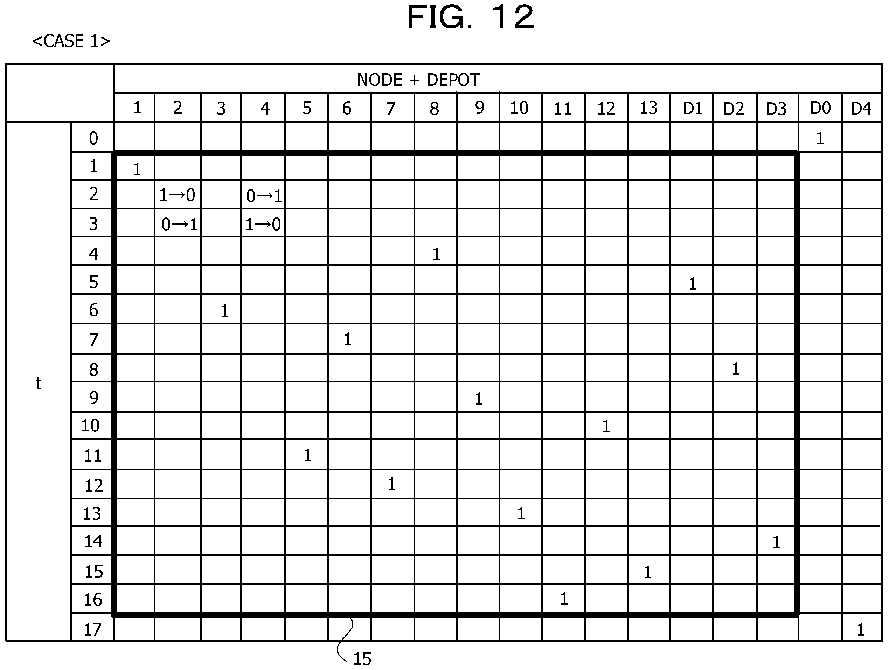

FIG. 12 illustrates an example of case 1.

FIG. 12 illustrates the example in which, among the state variables (state variables of 16 × 16 in the frame 15) in the case where the CVRP with four trucks and 13 nodes is calculated as is the case with FIG. 1, the order to visit the nodes with node numbers = 2, 4 is exchanged by value changes of four state variables.

In case 1, out of the total $D_t$ of the demands at each of the times t, $D_2$ and $D_3$ are exchanged in the example illustrated in FIG. 12. However, the total of the carrying capacities ($O_{TOT1}$ to $D_{TOT4}$) on each of the routes does not change. Thus, the constraint term in the evaluation function as represented by Expression (11) does not change.

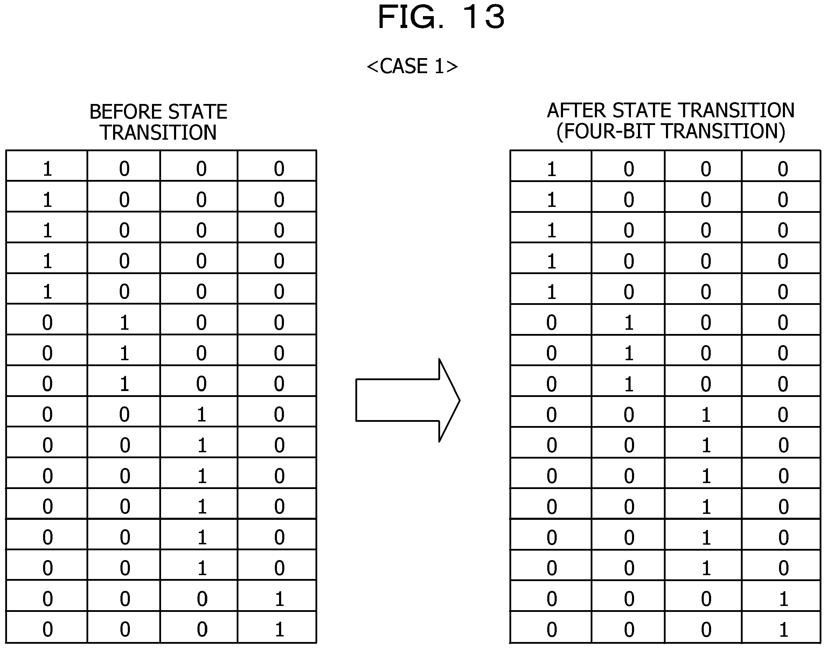

FIG. 13 illustrates a storage example of $r_{i,t}$ before and after the state transition of Case 1.

In the case 1, as illustrated in FIG. 13, $r_{i,t}$ does not change before and after the state transition (changes in four state variables (four-bit transition)).

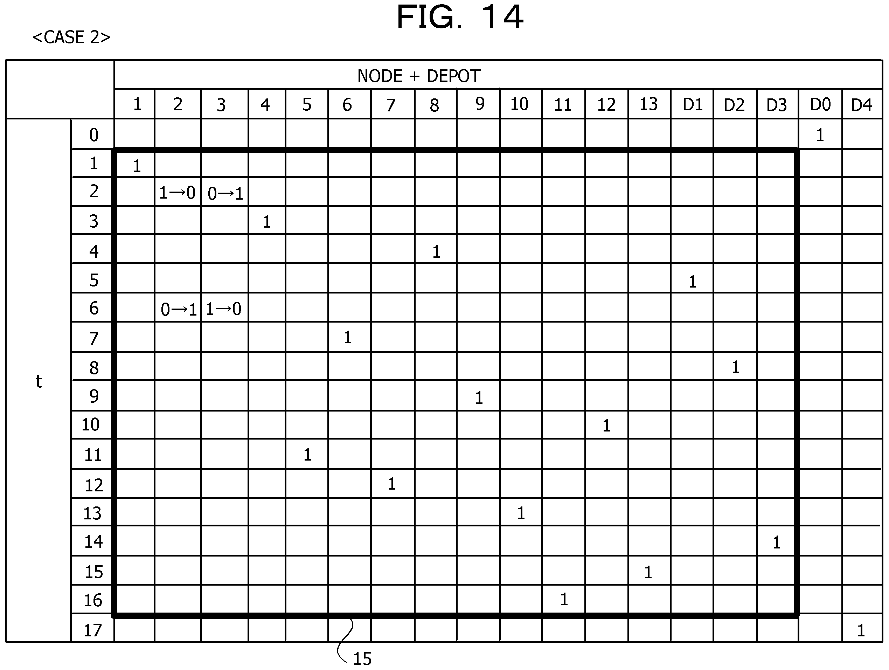

FIG. 14 illustrates an example of case 2.

In the example illustrated in FIG. 14, in the first route, the node visited by the truck at the time t = 2 is changed from the node with the node number = 2 to the node with the node number = 3. In the second route, the node visited by the truck at the time t = 3 is changed from the node of the node number = 3 to the node of the node number = 2. For example, the nodes to visit are exchanged between different routes.

In case 2, out of the total $D_t$ of the demands at each of the times t, $D_2$ and $D_6$ are exchanged, and $D_{TOT1}$ and $D_{TOT2}$ are changed. Thus, a change in constraint term occurs. However, $r_{i,t}$ before and after the state transition of Case 2 is similar to that in FIG. 13, and does not change before and after the transition.

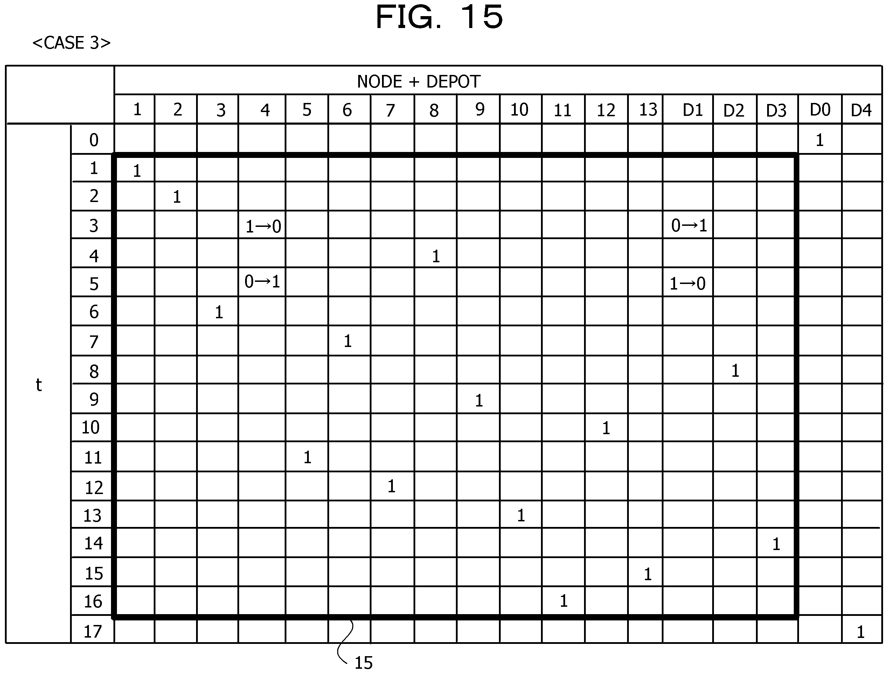

FIG. 15 illustrates an example of case 3.

In the example illustrated in FIG. 15, in the first route, the truck returns to a depot at the time t = 3 instead of visiting the node with the node number = 4. In the second route, the truck visits the node with the node number = 4 instead of being in the depot at the time t = 5.

In case 3, out of the total $D_t$ of the demands at each of the times t, $D_3$ and $D_5$ are exchanged, and $D_{TOT1}$ and $D_{TOT2}$ are changed. Thus, a change in constraint term occurs.

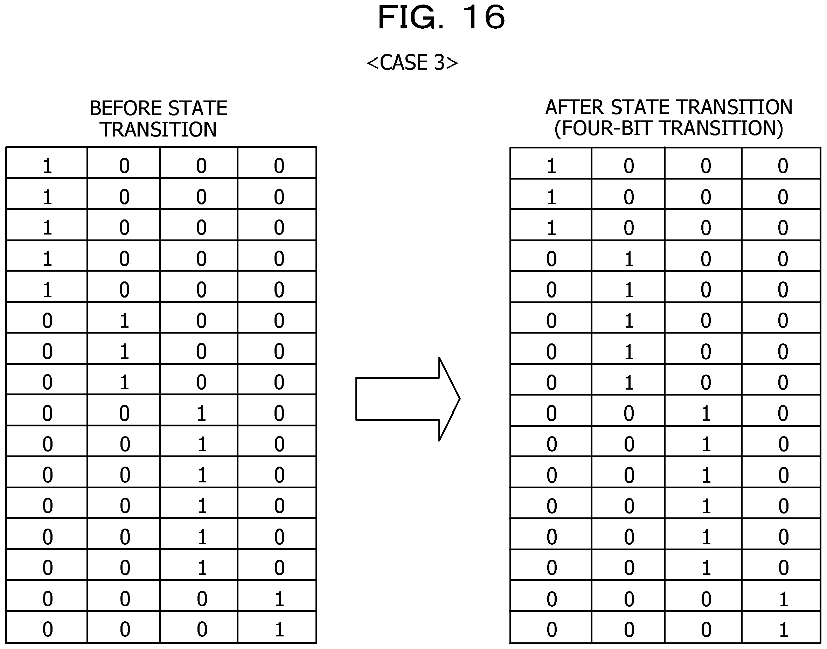

FIG. 16 illustrates a storage example of $r_{i,t}$ before and after the state transition of Case 3.

In case 3, the number of the nodes to visit changes in two routes before and after the state transition. Thus, $r_{i,t}$ for two routes also changes before and after the state transition as illustrated in FIG. 16.

The optimization apparatus 20 calculates $D_{TOT1}$ to $D_{TOT4}$ based on $D_t$ and $r_{i,t}$ and calculates $\Delta D_{TOT1}$ to $\Delta D_{TOT4}$ in consideration of cases 1 to 3 described above. As described above, $D_{TOT1}$ to $D_{TOT4}$ do not change in the state transition of Case 1. In contrast, in the state transition of Case 2, 3, changes occur in any two of $D_{TOT1}$ to $D_{TOT4}$.

In the example illustrated in FIG. 14 (case 2), $D_{TOT1}$ before the state transition is $D_{TOT1} = D_1 + D_2 + D_3 + D_4 + D_5$, and the $D_{TOT2}$ before the state transition is $D_{TOT2} = D_6 + D_7 + D_8$. $D_{TOT1}$ after the state transition is $D_{TOT1} = D_1 + D'_2 + D_3 + D_4 + D_5$, and the $D_{TOT2}$ after the state transition is $D_{TOT2} = D'_6 + D_7 + D_8$. Here, $D'_2 = -D'_6$.

A change in the sum of the carrying capacities before and after the state transition is $\Delta D_{TOT1} = \Delta D_2 = D'_2 - D_2$. This is able to be represented by Expression (14) below.

$$\Delta D_{TOT1} = \sum_{i=2}^{2} \left( D_i \Delta r_{1,i} + \Delta D_i (r_{1,i}) \right) \qquad (14)$$

In Expression (14), $\Delta r_{1,i}$ represents a change in $r_{1,i}$ before and after the state transition at the time t = i. In the example of FIG. 14, $\Delta r_{1,i}$ is 0.

Meanwhile, representation $\Delta D_{TOT2} = -\Delta D_{TOT1}$ is possible.

In the example illustrated in FIG. 15 (case 3), $D_{TOT1}$ before the state transition is $D_{TOT1} = D_1 + D_2 + D_3 + D_4 + D_5$, and the $D_{TOT2}$ before the state transition is $D_{TOT2} = D_6 + D_7 + D_8$. $D_{TOT1}$ after the state transition is $D_{TOT1} = D_1 + D_2 + D'_3$, and the $D_{TOT2}$ after the state transition is $D_{TOT2} = D_4 + D'_5 + D_6 + D_7 + D_8$.

A change in the sum of the carrying capacities before and after the state transition is $\Delta D_{TOT1} = \Delta D_3 - (D_4 + D_5)$

= $\Delta D_3 + (D_4 Ar_{i,4} + D_5 \Delta r_{1,5})$. This is able to be represented by Expression (15) below.

$$\Delta D_{TOT1} = \sum_{i=3}^{5} (D_i \Delta r_{1,i} + \Delta D_i (r_{1,i})) \qquad (15)$$

In Expression (15), $\Delta r_{1,i}$ represents a change in $r_{1,i}$ before and after the state transition at the time t = i. In case 3, $\Delta r_{1,i}$ is 1.

Meanwhile, representation $\Delta D_{TOT2} = -\Delta D_{TOT1}$ is possible.

When the above-described examples are considered, a change $\Delta D_{TOTp}$ in the sum of the carrying capacities before and after the state transition in a certain route p is able to be calculated by the following stages.

Stage 1: The optimization apparatus 20 generates the identification numbers = i, j, k, l of four state variables of transition candidates.

Stage 2: The optimization apparatus 20 calculates, based on the identification numbers = i, j, k, l, the route p on which a change in the sum of the carrying capacities occurs.

Stage 3: The optimization apparatus 20 obtains a section [s1, s2] of the identification numbers where the change in the sum of the carrying capacities occurs for the route p.

Stage 4: The optimization apparatus 20 calculates $\Delta D_t$, $\Delta r_{i,t}$ for the section [s1, s2].

Stage 5: The optimization apparatus 20 calculates $\Delta D_{TOPp}$ based on Expression (16) below.

$$\Delta D_{TOTp} = \sum_{i=s1}^{s2} (D_i \Delta r_{p,i} + \Delta D_i (r_{p,i})) \qquad (16)$$

In the optimization apparatus 20, in order to execute stages 1 to 5 as described above, for example, the $\Delta E$ calculation unit described as below may be used.

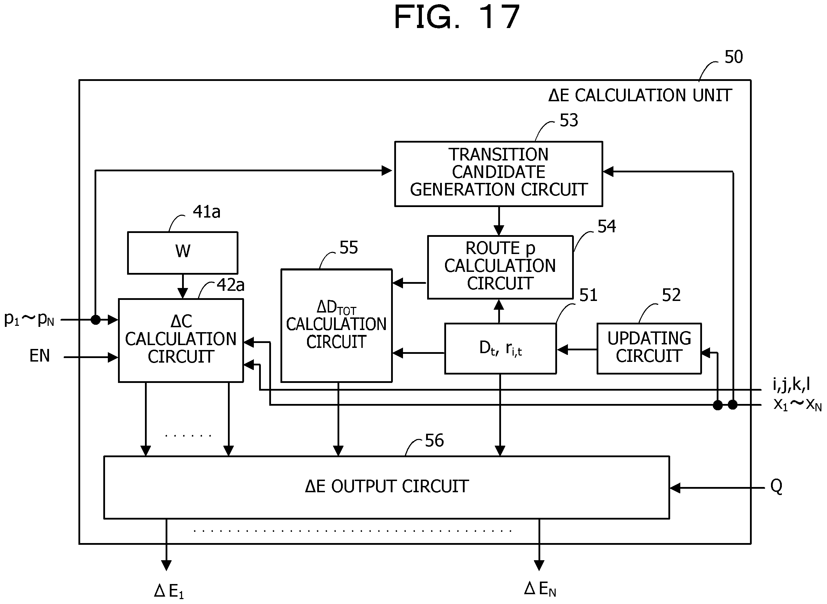

FIG. 17 illustrates another example of the $\Delta E$ calculation unit. In FIG. 17, the same elements as the elements illustrated in FIG. 10 are denoted by the same reference signs.

A $\Delta E$ calculation unit 50 includes a storage unit 51, an updating circuit 52, a transition candidate generation circuit 53, a route p calculation circuit 54, a $\Delta D_{TOT}$ calculation circuit 55, and a $\Delta E$ output circuit 56.

The storage unit 51 stores $D_t$ and $r_{i,t}$ as illustrated in FIG. 11. The storage unit 51 may be realized by, for example, using an electronic circuit such as a register, an SRAM, or the like.

The updating circuit 52 updates $D_t$ and $r_{i,t}$ stored in the storage unit 51 based on the values of $x_1$ to $x_N$.

The transition candidate generation circuit 53 generates, based on the values of $x_1$ to $x_N$, the identification numbers = i, j, k, l of four state variables of the transition candidates. For example, the transition candidate generation circuit 53 selects the identification number = j from the identification numbers of the state variables whose current values are 0 and repeats a process of generating the other identification numbers = i, k, l as many times as the number of the state variables having a value of 0 such that the 2-Way 1-hot constraint is satisfied. However, the transition candidate generation circuit 53 does not employ, as any of the identification numbers = i, j, k, l, the identification numbers of the state variables whose transition permission-prohibition bits $p_1$ to $p_N$ are 1.

Further limiting the range in which the value change is permitted as described above as illustrated in FIG. 4 may enable simplification of the hardware configuration of the transition candidate generation circuit 53 and circuits that perform subsequent processes.

The route p calculation circuit 54 calculates, based on the identification numbers = i, j, k, l generated by the transition candidate generation circuit 53, the route p on which a change in the sum of the carrying capacities occurs. For example, this process is performed as many times as the number of sets of the identification numbers = i, j, k, l generated by the transition candidate generation circuit 53.

The $\Delta D_{TOT}$ calculation circuit 55 obtains the section [s1, s2] of the identification numbers where the change in the sum of the carrying capacities occurs for the route p. For example, in the case of the example illustrated in FIG. 14 (case 2), s1 = s2 = 2, and in the case of the example illustrated in FIG. 15 (case 3), s1 = 3, s2 = 5. Based on the $D_t$ and the $r_{i,t}$, the $\Delta D_{TOT}$ calculation circuit 55 calculates $\Delta D_t$ and $\Delta r_{i,t}$ for the section [s1, s2] and calculates the $\Delta D_{TOTp}$ as represented by Expression (16).

The $\Delta E$ output circuit 56 calculates $D_{TOTp}$ based on the $D_t$ and the $r_{i,t}$. $\Delta E$ output circuit 56 calculates and outputs $\Delta E_1$ to $\Delta E_N$ by adding $\Delta P_p$ to $\Delta C$ for each of $x_1$ to $x_N$ output by the $\Delta C$ calculation circuit 42a for all routes p on which the sum of the carrying capacities changes. Here, $\Delta P_p = \max(D_{TOTp} + \Delta D_{TOTp} - Q, 0) - \max(D_{TOTp} - Q, 0)$.

(Example of Overall Operation of Optimization Apparatus 20)

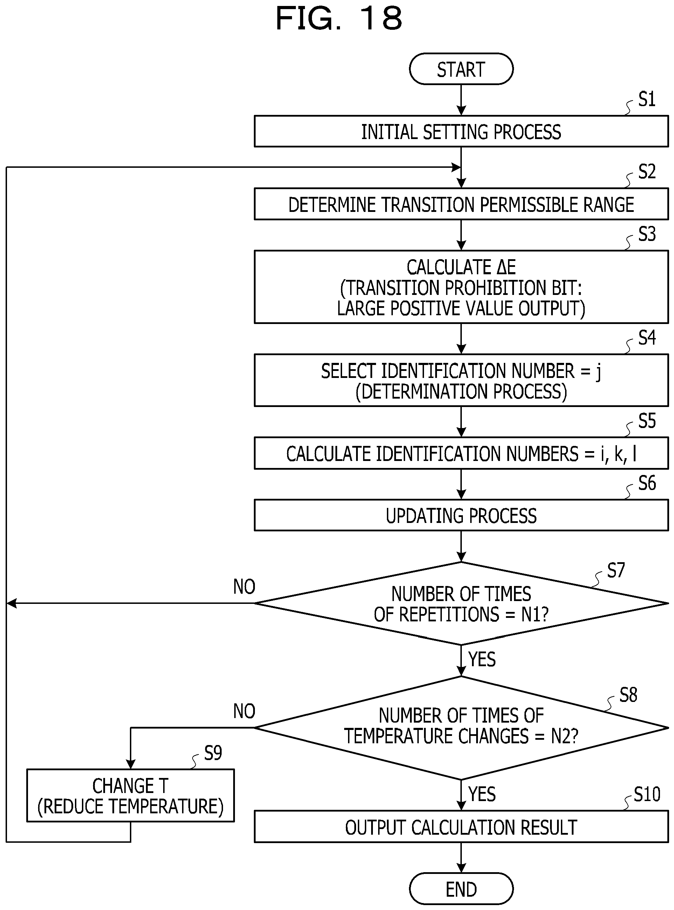

FIG. 18 is a flowchart illustrating an example of a flow of overall operation of the optimization apparatus.

Although a case where the simulated annealing method is used is described below as an example, the present disclosure is not limited to this, and a technique such as a replica exchange method may be used.

First, under control of the control unit 21e, the initial setting process is performed (step S1). In the initial setting process, the control unit 21e performs setting of the weight coefficient for the calculation of Expression (4), setting of initial values of the local field and the state variables, setting of the identification numbers of the groups to which the state variables belong, and so forth. When the above-described first calculation technique for $\Delta E$ is used, the control unit 21e sets $V_1$ to $V_4$. When the second calculation technique for $\Delta E$ is used, the control unit 21e sets initial values of $D_t$ and $r_{i,t}$.

The initial values of the state variables are set such that the 1-hot constraint is satisfied in each of the groups. For a group for which the transition permissible range determination unit 22 determines the range in which the value change is permitted, the hot bit is set such that the constraint condition violations 1 to 3 as described above are not applied, for example.

The control unit 21e sets an initial value of T based on a predetermined temperature change schedule, the number of times of repetitions of the updating process, and so forth.

Then, the transition permissible range determination unit 22 determines the range in which the value change is permitted (transition permissible range) (step S2).

In each of the groups satisfying the 1-hot constraint, the $\Delta E$ calculation unit 21a, 40, 50 calculates $\Delta E_1$ to $\Delta E_N$ when transitioning from a state satisfying the 1-hot constraint to another state satisfying the 1-hot constraint by state transition of Hamming distance = 4 (step S3).

For transition prohibition bits that are the state variables for which the signal indicating the transition prohibition is output by the transition permissible range determination unit 22 or the state variables having a current value of 1, the $\Delta E$ calculation unit 21a, 40, 50 outputs a predetermined large positive value as the energy change amount.

After the process in step S3 has been performed, the selection circuit 21b selects the identification number = j based on $\Delta E_1$ to $\Delta E_N$ (step S4).

The process of step S4 is a determination process that determines whether to permit a change in any of $x_1$ to $x_N$ based on $\Delta E_1$ to $\Delta E_N$. For example, the selection circuit 21b compares the thermal excitation energy generated based on T and uniform random numbers with each of $\Delta E_1$ to $\Delta E_N$, selects the energy change amount smaller than the thermal excitation energy, and selects an identification number corresponding to the change amount as j. When there are a plurality of energy change amounts that are smaller than the thermal excitation energy, the selection circuit 21b selects one of the energy change amounts out of those, for example, according to a predetermined rule or at random. When there is no energy change amount smaller than the thermal excitation energy, a change in any state variable does not occur. However, the selection circuit 21b may promote generation of the state transition by, for example, adding an offset value to the thermal excitation energy.

Furthermore, after the process of step S4 has been performed, the identification number calculation unit 21c calculates the identification numbers = i, k, I from the selected identification number = j (step S5).

Then, the updating process is performed (step S6). In the process of step S6, the $\Delta E$ calculation unit 21a, 40, 50 updates the local field, and the updating unit 21d updates four state variables stored in the storage unit 21d1. When the $\Delta E$ calculation unit 50 is used, $D_t$ and $r_{i,t}$ stored in the storage unit 51 are updated by the updating circuit 52.

In the process of step S6, the identification number of the hot bit stored in the storage unit 22a is updated by the hot bit updating unit 22b of the transition permissible range determination unit 22.

The control unit 21e determines whether the number of times of repetitions of the processes in steps S2 to S6 has reached a predetermined number of times N1 (step S7). When the number of times of repetitions has not reached the predetermined number of times N1, the processes from step S2 are repeated.

When the number of times of repetitions has reached the predetermined number N1, the control unit 21e determines whether the number of times of changes in T (the number of times of temperature changes) has reached a predetermined number of times N2 (step S8).

When the number of times of temperature changes has not reached the predetermined number N2, the control unit 21e changes T (reduces the temperature) (step S9). The manner of changing values of T and the predetermined numbers of times N1, N2 (for example, to what extent the values are reduced at one time) is determined based on the predetermined temperature change schedule or the like. After the process in step S9 has been performed, the processes from step S2 are repeated.

When the number of times of temperature changes has reached the predetermined number of times N2, for example, the control unit 21e outputs the values of all the state variables held in the storage unit 21d1 at that time as a calculation result (step S10) and ends the processing. Each time the state transition occurs, the control unit 21e may calculate the energy based on the values of all the state variables, sequentially update the values of all the state variables with which the minimum energy is obtained, and output the values of all the state variables as a solution at the time when the number of times of temperature changes has reached the predetermined number of times N2.

The order of the processes described above is not limited to the example described above, and turns of the processes may be interchanged as appropriate.

As described above, the optimization apparatus 20 according to the second embodiment produces similar effects to those of the optimization apparatus 10 according to the first embodiment. For example, based on the identification number of the state variable having a value of 1 in a certain group, the transition permissible range determination unit 22 determines the upper limit or the lower limit of the identification number of the state variable whose value is permitted to change from 0 to 1 in another group. Thus, the range of the state variable whose value is permitted to change next is able to be limited in accordance with the current state, and a solution that satisfies the constraint condition without increasing the constraint terms is able to be searched. Accordingly, convergence to the optimum solution may be improved.

Although an aspect of the optimization apparatus and the method of optimizing according to the present disclosure has been described based on the embodiments, these are merely exemplary, and the present disclosure is not limited to the above description.

## Claims

1. An optimization apparatus comprising:

   a searching unit that searches for an optimum solution that minimizes energy by repeating changes of a value within a permittable value range, based on a change amount of the energy when the value of one of a plurality of state variables included in an evaluation function which represent the energy of an Ising model that indicates a combinatorial optimization problem changes; and
   a transition permissible range determination unit that determines at least one of limit selected from an upper limit and a lower limit of a second identification number of a second state variable for which a change from the second value is permitted in a second state variable group out of the plurality of state variable groups, based on a first identification number of a first state variable that has a first value in a first state variable group out of a plurality of state variable groups included in the plurality of state variables and in each of which one of the state variables has the first value and other state variables have a second value.

2. The optimization apparatus according to claim 1, wherein

   the searching unit includes an energy change amount calculation unit that calculates the change amount of the energy, and
   the energy change amount calculation unit outputs a certain positive value as the change amount when a state variable other than the second state variable for which a change from the second value is permitted changes from the second value in the second state variable group.

3. The optimization apparatus according to claim 1 or 2, wherein
   when the combinatorial optimization problem is a routing problem of a plurality of nodes, a number of the plurality of state variables is a square of a value obtained by adding a value smaller than a number of a plurality of transport vehicles by one to a number of the plurality of nodes other than a departure point.

4. The optimization apparatus according to claim 3, wherein
   a number of the plurality of state variable groups is smaller than the number of the transport vehicles by one, and
   each of the plurality of state variable groups includes the state variables a number of which is identical to the number of the plurality of nodes and which represent whether any of transport vehicles out of the transport vehicles the number of which is smaller than the number of the transport vehicles by one has returned to the departure point at times.

5. The optimization apparatus according to claim 4, wherein
   the transition permissible range determination unit determines at least one of limit selected from an upper limit and a lower limit so that out of the transport vehicles the number which is smaller than the number of the transport vehicles by one, a second transport vehicle that visits any of the plurality of nodes at a time before a first transport vehicle visits the node returns to the departure point at a time before the first transport vehicle returns to the departure point.

6. The optimization apparatus according to claim 5, wherein
the transition permissible range determination unit determines at least one of limit selected from an upper limit and a lower limit so that the first transport vehicle does not return to the departure point at a time immediately after a time when the second transport vehicle returns to the departure point.

7. A optimization method for a computer to execute a process comprising:

based on a change amount of energy when a value of one of a plurality of state variables included in an evaluation function which represent the energy of an Ising model that indicates a combinatorial optimization problem changes, searching for an optimum solution that minimizes the energy by repeating changes of the value within a permittable value range; and
determining at least one of limit selected from an upper limit and a lower limit of a second identification number of a second state variable for which a change from the second value is permitted in a second state variable group out of the plurality of state variable groups, based on a first identification number of a first state variable that has a first value in a first state variable group out of a plurality of state variable groups included in the plurality of state variables and in each of which one of the state variables has the first value and other state variables have a second value.

8. The optimization method according to claim 7, wherein the process further comprising:

calculating the change amount of the energy; and
outputting a certain positive value as the change amount when a state variable other than the second state variable for which a change from the second value is permitted changes from the second value in the second state variable group.

9. The optimization method according to claim 7 or 8, wherein
when the combinatorial optimization problem is a routing problem of a plurality of nodes, a number of the plurality of state variables is a square of a value obtained by adding a value smaller than a number of a plurality of transport vehicles by one to a number of the plurality of nodes other than a departure point.

10. The optimization method according to claim 9, wherein
a number of the plurality of state variable groups is smaller than the number of the transport vehicles by one, and each of the plurality of state variable groups includes the state variables a number of which is identical to the number of the plurality of nodes and which represent whether any of transport vehicles out of the transport vehicles the number of which is smaller than the number of the transport vehicles by one has returned to the departure point at times.

11. The optimization method according to claim 10, wherein the process further comprising
determining at least one of limit selected from an upper limit and a lower limit so that out of the transport vehicles the number which is smaller than the number of the transport vehicles by one, a second transport vehicle that visits any of the plurality of nodes at a time before a first transport vehicle visits the node returns to the departure point at a time before the first transport vehicle returns to the departure point.

12. The optimization method according to claim 11, wherein the process further comprising
determining at least one of limit selected from an upper limit and a lower limit so that the first transport vehicle does not return to the departure point at a time immediately after a time when the second transport vehicle returns to the departure point.

# FIG. 1

| | | NODE + DEPOT | | | | | | | | | | | | | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | D1 | D2 | D3 | D0 | D4 |
| t | 0 | | | | | | | | | | | | | | | | | 1 | |
| | 1 | 1 | | | | | | | | | | | | | | | | | |
| | 2 | | 1 | | | | | | | | | | | | | | | | |
| | 3 | | | 1 | | | | | | | | | | | | | | | |
| | 4 | | | | | | | 1 | | | | | | | | | | | |
| | 5 | | | | | | | | | | | | | | 1 | | | | |
| | 6 | | | 1 | | | | | | | | | | | | | | | |
| | 7 | | | | | | 1 | | | | | | | | | | | | |
| | 8 | | | | | | | | | | | | | | | 1 | | | |
| | 9 | | | | | | | | | 1 | | | | | | | | | |
| | 10 | | | | | | | | | | | | 1 | | | | | | |
| | 11 | | | | | | 1 | | | | | | | | | | | | |
| | 12 | | | | | | | 1 | | | | | | | | | | | |
| | 13 | | | | | | | | | | 1 | | | | | | | | |
| | 14 | | | | | | | | | | | | | | | | 1 | | |
| | 15 | | | | | | | | | | | | | 1 | | | | | |
| | 16 | | | | | | | | | | | | 1 | | | | | | |
| | 17 | | | | | | | | | | | | | | | | | | 1 |

15

$x_1 \sim x_{16}$  . . . . . . . . .

gD1: $x_{209} \sim x_{224}$  gD3: $x_{241} \sim x_{256}$

gD2:  $x_{225}, \cdots,$  $x_{231}, x_{232}, x_{233}, x_{234}, x_{235}, x_{236},$  $\cdots, x_{240}$

TRANSITION PROHIBITION:1
TRANSITION PERMISSION:0    1,$\cdots$,    0,  1,  0,  0,  0,  0,  1$\cdots$,

OPTIMIZATION
APPARATUS  10

TRANSITION PERMISSIBLE RANGE
DETERMINATION UNIT  12

STORAGE UNIT  12a

gD1: 209~224
gD2: 225~240
gD3: 241~256

hD1:213, hD2:232, hD3:254

11

SEARCHING
UNIT  11a

STORAGE
UNIT
$(x_1 \sim x_N)$

# FIG. 2

# FIG. 3

| gD1 | gD2 | gD3 |
|---|---|---|
| $y_{D1,1}$ | $y_{D2,1}$ | $y_{D3,1}$ |
| $y_{D1,2}$ | $y_{D2,2}$ | $y_{D3,2}$ |
| $y_{D1,3}$ | $y_{D2,3}$ | $y_{D3,3}$ |
| $y_{D1,4}$ | $y_{D2,4}$ | $y_{D3,4}$ |
| $y_{D1,5}$ | $y_{D2,5}$ | $y_{D3,5}$ |
| $y_{D1,6}$ | $y_{D2,6}$ | $y_{D3,6}$ |
| $y_{D1,7}$ | $y_{D2,7}$ | $y_{D3,7}$ |
| $y_{D1,8}$ | $y_{D2,8}$ | $y_{D3,8}$ |
| $y_{D1,9}$ | $y_{D2,9}$ | $y_{D3,9}$ |
| $y_{D1,10}$ | $y_{D2,10}$ | $y_{D3,10}$ |
| $y_{D1,11}$ | $y_{D2,11}$ | $y_{D3,11}$ |
| $y_{D1,12}$ | $y_{D2,12}$ | $y_{D3,12}$ |
| $y_{D1,13}$ | $y_{D2,13}$ | $y_{D3,13}$ |
| $y_{D1,14}$ | $y_{D2,14}$ | $y_{D3,14}$ |
| $y_{D1,15}$ | $y_{D2,15}$ | $y_{D3,15}$ |
| $y_{D1,16}$ | $y_{D2,16}$ | $y_{D3,16}$ |

=

| OK | | | NG1 | | | NG2 | | | NG3 | | | NG4 | | |
|---|---|---|---|---|---|---|---|---|---|---|---|---|---|---|
| 0 | 0 | 0 | 0 | 0 | 0 | 0 | 0 | 0 | 0 | 0 | 0 | 1 | 0 | 0 |
| 0 | 0 | 0 | 0 | 0 | 0 | 0 | 0 | 1 | 0 | 0 | 0 | 0 | 0 | 0 |
| 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 |
| 1 | 0 | 0 | 0 | 1 | 0 | 0 | 0 | 0 | 0 | 0 | 0 | 0 | 0 | 0 |
| 0 | 0 | 0 | 0 | 0 | 0 | 0 | 1 | 0 | 1 | 0 | 0 | 0 | 1 | 0 |
| 0 | 0 | 0 | 0 | 0 | 0 | 0 | 0 | 0 | 0 | 1 | 0 | 0 | 0 | 0 |
| 0 | 1 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 1 | 0 | 0 | 0 |
| 0 | 0 | 0 | 1 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 |
| 0 | 0 | 0 | 0 | 0 | 1 | 0 | 0 | 0 | 0 | 0 | 0 | 0 | 0 | 0 |
| 0 | 0 | 1 | 0 | 0 | 0 | 0 | 0 | 0 | 0 | 0 | 0 | 0 | 0 | 0 |
| 0 | 0 | 0 | 0 | 0 | 0 | 1 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 1 |

EP 4 009 242 A1

# FIG. 4

| gD1 | gD2 | gD3 |
|-----|-----|-----|
| 0 | 0 | 0 |
| 0 | 0 | 0 |
| 0 | 0 | 0 |
| **0** | 0 | 0 |
| **1** | 0 | 0 |
| 0 | 0 | 0 |
| 0 | **1** | 0 |
| 0 | **0** | 0 |
| 0 | 0 | 0 |
| 0 | 0 | 0 |
| 0 | 0 | 0 |
| 0 | 0 | 0 |
| 0 | 0 | **0** |
| 0 | 0 | **0** |
| 0 | 0 | **1** |
| 0 | 0 | 0 |

# FIG. 5

# FIG. 6

22

## TRANSITION PERMISSIBLE RANGE DETERMINATION UNIT

22a

### STORAGE UNIT

22d

### TRANSITION PERMISSION-PROHIBITION SIGNAL OUTPUT UNIT

### BOUNDARY VALUE CALCULATION UNIT

22c

### HOT BIT UPDATING UNIT

22b

$X_1 \sim X_N$          $j, k$

# FIG. 7

|  |  | Min | hot bit | Max |  |
| --- | --- | --- | --- | --- | --- |
| | +1 | | | | |
| GROUP gD1: | 209 | 210 ···· 213 | | 214 | ····· 224 |
| | | +18 | -18 | | |
| GROUP gD2: | 225 ···· | 231 | 232 ···· | 236 | ··· 240 |
| | | +18 | -18 | | |
| GROUP gD3: | 241 ··· | 250 ···· 254 | | 255 | 256 |
| | | | | | -1 |

# FIG. 8

STORAGE UNIT — 22a

| | | | | | |
|---|---|---|---|---|---|
| STATE VARIABLE IDENTIFICATION NUMBER | 1 | 2 | ............................... | N | 22a1 |
| GROUP IDENTIFICATION NUMBER | $g_1$ | $g_2$ | ............................... | $g_N$ | 22a2 |
| VALUE OF STATE VARIABLE | $x_1$ | $x_2$ | ............................... | $x_N$ | 22a3 |
| Min | $Min_1$ | $Min_2$ | ............................... | $Min_N$ | 22a4 |
| Max | $Max_1$ | $Max_2$ | ............................... | $Max_N$ | 22a5 |

— 22d

TRANSITION PERMISSION-PROHIBITION SIGNAL OUTPUT UNIT

— 22d1

TRANSITION PERMISSION-PROHIBITION BIT GENERATION CIRCUIT

— 22d2

TRANSITION PERMISSION-PROHIBITION BIT GENERATION CIRCUIT

............

— 22dN

TRANSITION PERMISSION-PROHIBITION BIT GENERATION CIRCUIT

$p_1$     $p_2$     $p_N$

# FIG. 9

Min$_i$     i     Max$_i$    x$_i$    22di

COMPARISON CIRCUIT

COMPARISON CIRCUIT   31

30

32

p$_i$

# FIG. 10

# FIG. 11

| $D_1$ | $r_{1,1}$ | $r_{2,1}$ | $r_{3,1}$ | $r_{4,1}$ |
|---|---|---|---|---|
| $D_2$ | $r_{1,2}$ | $r_{2,2}$ | $r_{3,2}$ | $r_{4,2}$ |
| $D_3$ | $r_{1,3}$ | $r_{2,3}$ | $r_{3,3}$ | $r_{4,3}$ |
| $D_4$ | $r_{1,4}$ | $r_{2,4}$ | $r_{3,4}$ | $r_{4,4}$ |
| $D_5$ | $r_{1,5}$ | $r_{2,5}$ | $r_{3,5}$ | $r_{4,5}$ |
| $D_6$ | $r_{1,6}$ | $r_{2,6}$ | $r_{3,6}$ | $r_{4,6}$ |
| $D_7$ | $r_{1,7}$ | $r_{2,7}$ | $r_{3,7}$ | $r_{4,7}$ |
| $D_8$ | $r_{1,8}$ | $r_{2,8}$ | $r_{3,8}$ | $r_{4,8}$ |
| $D_9$ | $r_{1,9}$ | $r_{2,9}$ | $r_{3,9}$ | $r_{4,9}$ |
| $D_{10}$ | $r_{1,10}$ | $r_{2,10}$ | $r_{3,10}$ | $r_{4,10}$ |
| $D_{11}$ | $r_{1,11}$ | $r_{2,11}$ | $r_{3,11}$ | $r_{4,11}$ |
| $D_{12}$ | $r_{1,12}$ | $r_{2,12}$ | $r_{3,12}$ | $r_{4,12}$ |
| $D_{13}$ | $r_{1,13}$ | $r_{2,13}$ | $r_{3,13}$ | $r_{4,13}$ |
| $D_{14}$ | $r_{1,14}$ | $r_{2,14}$ | $r_{3,14}$ | $r_{4,14}$ |
| $D_{15}$ | $r_{1,15}$ | $r_{2,15}$ | $r_{3,15}$ | $r_{4,15}$ |
| $D_{16}$ | $r_{1,16}$ | $r_{2,16}$ | $r_{3,16}$ | $r_{4,16}$ |

FIG. 12

<CASE 1>

| t | NODE + DEPOT | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | D1 | D2 | D3 | D0 | D4 |
| 0 | | | | | | | | | | | | | | | | | 1 | |
| 1 | 1 | | | | | | | | | | | | | | | | | |
| 2 | | 1→0 | | 0→1 | | | | | | | | | | | | | | |
| 3 | | 0→1 | | 1→0 | | | | | | | | | | | | | | |
| 4 | | | | | | | | 1 | | | | | | | | | | |
| 5 | | | | | | | | | | | | | | 1 | | | | |
| 6 | | | 1 | | | | | | | | | | | | | | | |
| 7 | | | | | | 1 | | | | | | | | | | | | |
| 8 | | | | | | | | | | | | | | | 1 | | | |
| 9 | | | | | | | | | 1 | | | | | | | | | |
| 10 | | | | | | | | | | | | 1 | | | | | | |
| 11 | | | | | 1 | | | | | | | | | | | | | |
| 12 | | | | | | | 1 | | | | | | | | | | | |
| 13 | | | | | | | | | | 1 | | | | | | | | |
| 14 | | | | | | | | | | | | | | | | 1 | | |
| 15 | | | | | | | | | | | | | 1 | | | | | |
| 16 | | | | | | | | | | | 1 | | | | | | | |
| 17 | | | | | | | | | | | | | | | | | | 1 |

15

EP 4 009 242 A1

# FIG. 13

<CASE 1>

| BEFORE STATE TRANSITION | | | |
|---|---|---|---|
| 1 | 0 | 0 | 0 |
| 1 | 0 | 0 | 0 |
| 1 | 0 | 0 | 0 |
| 1 | 0 | 0 | 0 |
| 1 | 0 | 0 | 0 |
| 0 | 1 | 0 | 0 |
| 0 | 1 | 0 | 0 |
| 0 | 1 | 0 | 0 |
| 0 | 0 | 1 | 0 |
| 0 | 0 | 1 | 0 |
| 0 | 0 | 1 | 0 |
| 0 | 0 | 1 | 0 |
| 0 | 0 | 1 | 0 |
| 0 | 0 | 1 | 0 |
| 0 | 0 | 0 | 1 |
| 0 | 0 | 0 | 1 |

⇒

| AFTER STATE TRANSITION (FOUR-BIT TRANSITION) | | | |
|---|---|---|---|
| 1 | 0 | 0 | 0 |
| 1 | 0 | 0 | 0 |
| 1 | 0 | 0 | 0 |
| 1 | 0 | 0 | 0 |
| 1 | 0 | 0 | 0 |
| 0 | 1 | 0 | 0 |
| 0 | 1 | 0 | 0 |
| 0 | 1 | 0 | 0 |
| 0 | 0 | 1 | 0 |
| 0 | 0 | 1 | 0 |
| 0 | 0 | 1 | 0 |
| 0 | 0 | 1 | 0 |
| 0 | 0 | 1 | 0 |
| 0 | 0 | 1 | 0 |
| 0 | 0 | 0 | 1 |
| 0 | 0 | 0 | 1 |

EP 4 009 242 A1

<CASE 2>

## FIG. 14

| t | | NODE + DEPOT | | | | | | | | | | | | | | | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | D1 | D2 | D3 | D0 | D4 |
| | 0 | | | | | | | | | | | | | | | | | 1 | |
| | 1 | 1 | | | | | | | | | | | | | | | | | |
| | 2 | | 1→0 | 0→1 | | | | | | | | | | | | | | | |
| | 3 | | | | 1 | | | | | | | | | | | | | | |
| | 4 | | | | | | | | 1 | | | | | | | | | | |
| | 5 | | | | | | | | | | | | | | | 1 | | | |
| | 6 | | 0→1 | 1→0 | | | | | | | | | | | | | | | |
| | 7 | | | | | | 1 | | | | | | | | | | | | |
| | 8 | | | | | | | | | | | | | | | 1 | | | |
| | 9 | | | | | | | | | 1 | | | | | | | | | |
| | 10 | | | | | | | | | | | | 1 | | | | | | |
| | 11 | | | | | 1 | | | | | | | | | | | | | |
| | 12 | | | | | | | 1 | | | | | | | | | | | |
| | 13 | | | | | | | | | | 1 | | | | | | | | |
| | 14 | | | | | | | | | | | | | | | | 1 | | |
| | 15 | | | | | | | | | | | | | 1 | | | | | |
| | 16 | | | | | | | | | | | 1 | | | | | | | |
| | 17 | | | | | | | | | | | | | | | | | | 1 |

15

EP 4 009 242 A1

FIG. 15

<CASE 3>

| t | | NODE + DEPOT | | | | | | | | | | | | | | | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | D1 | D2 | D3 | D0 | D4 |
| | 0 | | | | | | | | | | | | | | | | | 1 | |
| | 1 | 1 | | | | | | | | | | | | | | | | | |
| | 2 | | 1 | | | | | | | | | | | | | | | | |
| | 3 | | | | 1→0 | | | | | | | | | | 0→1 | | | | |
| | 4 | | | | | | | | 1 | | | | | | | | | | |
| | 5 | | | | 0→1 | | | | | | | | | | 1→0 | | | | |
| | 6 | | 1 | | | | | | | | | | | | | | | | |
| | 7 | | | | | | 1 | | | | | | | | | | | | |
| | 8 | | | | | | | | | | | | | | | 1 | | | |
| | 9 | | | | | | | | | 1 | | | | | | | | | |
| | 10 | | | | | | | | | | | | 1 | | | | | | |
| | 11 | | | | | 1 | | | | | | | | | | | | | |
| | 12 | | | | | | | 1 | | | | | | | | | | | |
| | 13 | | | | | | | | | | 1 | | | | | | | | |
| | 14 | | | | | | | | | | | | | | | | 1 | | |
| | 15 | | | | | | | | | | | | | 1 | | | | | |
| | 16 | | | | | | | | | | | 1 | | | | | | | |
| | 17 | | | | | | | | | | | | | | | | | | 1 |

15

EP 4 009 242 A1

# FIG. 16

<CASE 3>

BEFORE STATE
TRANSITION

| 1 | 0 | 0 | 0 |
|---|---|---|---|
| 1 | 0 | 0 | 0 |
| 1 | 0 | 0 | 0 |
| 1 | 0 | 0 | 0 |
| 1 | 0 | 0 | 0 |
| 0 | 1 | 0 | 0 |
| 0 | 1 | 0 | 0 |
| 0 | 1 | 0 | 0 |
| 0 | 0 | 1 | 0 |
| 0 | 0 | 1 | 0 |
| 0 | 0 | 1 | 0 |
| 0 | 0 | 1 | 0 |
| 0 | 0 | 1 | 0 |
| 0 | 0 | 1 | 0 |
| 0 | 0 | 0 | 1 |
| 0 | 0 | 0 | 1 |

AFTER STATE TRANSITION
(FOUR-BIT TRANSITION)

| 1 | 0 | 0 | 0 |
|---|---|---|---|
| 1 | 0 | 0 | 0 |
| 1 | 0 | 0 | 0 |
| 0 | 1 | 0 | 0 |
| 0 | 1 | 0 | 0 |
| 0 | 1 | 0 | 0 |
| 0 | 1 | 0 | 0 |
| 0 | 1 | 0 | 0 |
| 0 | 0 | 1 | 0 |
| 0 | 0 | 1 | 0 |
| 0 | 0 | 1 | 0 |
| 0 | 0 | 1 | 0 |
| 0 | 0 | 1 | 0 |
| 0 | 0 | 1 | 0 |
| 0 | 0 | 0 | 1 |
| 0 | 0 | 0 | 1 |

# FIG. 17

EP 4 009 242 A1

# FIG. 18

```
                    ┌──────────┐
                    │  START   │
                    └────┬─────┘
                         │                            ⌐S1
         ┌───────────────▼───────────────────┐
         │     INITIAL SETTING PROCESS        │
         └───────────────┬───────────────────┘
  ┌──────────────────────┤                     ⌐S2
  │      ┌───────────────▼───────────────────┐
  │      │ DETERMINE TRANSITION PERMISSIBLE RANGE │
  │      └───────────────┬───────────────────┘
  │                      │                     ⌐S3
  │      ┌───────────────▼───────────────────┐
  │      │          CALCULATE ΔE              │
  │      │   (TRANSITION PROHIBITION BIT:     │
  │      │   LARGE POSITIVE VALUE OUTPUT)     │
  │      └───────────────┬───────────────────┘
  │                      │                     ⌐S4
  │      ┌───────────────▼───────────────────┐
  │      │  SELECT IDENTIFICATION NUMBER = j  │
  │      │     (DETERMINATION PROCESS)        │
  │      └───────────────┬───────────────────┘
  │                      │                     ⌐S5
  │      ┌───────────────▼───────────────────┐
  │      │ CALCULATE IDENTIFICATION NUMBERS = i, k, l │
  │      └───────────────┬───────────────────┘
  │                      │                     ⌐S6
  │      ┌───────────────▼───────────────────┐
  │      │         UPDATING PROCESS           │
  │      └───────────────┬───────────────────┘
  │                      │                     ⌐S7
  │            ◇─────────▼──────────◇
  └─────NO─────  NUMBER OF TIMES
               OF REPETITIONS = N1?
               ◇──────────┬─────────◇
                          │ YES
                          │                    ⌐S8
                ◇─────────▼──────────◇
        ┌─NO───  NUMBER OF TIMES OF
        │        TEMPERATURE CHANGES = N2?
        │       ◇──────────┬─────────◇
        │                  │ YES          ⌐S10
  ┌─────▼─────┐            │
  │ CHANGE T  │ ⌐S9  ┌─────▼────────────────┐
  │ (REDUCE   │      │ OUTPUT CALCULATION RESULT │
  │TEMPERATURE)│     └─────┬────────────────┘
  └───────────┘            │
                      ┌────▼─────┐
                      │   END    │
                      └──────────┘
```

36

Europäisches
Patentamt

European
Patent Office

Office européen
des brevets

# EUROPEAN SEARCH REPORT

**Application Number**

EP 21 20 3674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/125984 A1 (KANDA KOUICHI [JP] ET AL) 23 April 2020 (2020-04-23)<br>* paragraph [0023] – paragraph [0074] *<br>* paragraph [0149] *<br>----- | 1-12 | INV.<br>G06N3/04<br>G06N7/00<br>G06N5/00 |

TECHNICAL FIELDS
SEARCHED      (IPC)

G06N

The present search report has been drawn up for all claims

| Place of search | Date of completion of the search | Examiner |
|---|---|---|
| The Hague | 12 April 2022 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 3674

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2022

| Patent document cited in search report | Publication date | Patent family member(s) | Publication date |
|---|---|---|---|
| US 2020125984 A1 | 23-04-2020 | CN 111077768 A | 28-04-2020 |
| | | EP 3640859 A1 | 22-04-2020 |
| | | JP 2020064535 A | 23-04-2020 |
| | | US 2020125984 A1 | 23-04-2020 |

For more details about this annex : see Official Journal of the European Patent Office, No. 12/82

EPO FORM P0459

## REFERENCES CITED IN THE DESCRIPTION

**Patent documents cited in the description**

- JP 2003285930 A
- JP 2003114132 A